# EUROPÄISCHE PATENTSCHRIFT

(11) **EP 3 674 150 B1**
(45) Veröffentlichungstag und Bekanntmachung des Hinweises auf die Patenterteilung: **18.08.2021**
(21) Anmeldenummer: 19218770.6
(22) Anmeldetag: 20.12.2019
(51) Int. Cl.: B60S 1/38, B60S 1/52, B60S 1/40

(54) **WISCHBLATTVORRICHTUNG**
WIPER BLADE DEVICE
DISPOSITIF DE LAME D'ESSUIE-GLACE

(30) Priorität: 28.12.2018 DE 102018251766
(43) Veröffentlichungstag der Anmeldung: 01.07.2020
(73) Patentinhaber: Robert Bosch GmbH, 70442 Stuttgart (DE)
(72) Erfinder: HEGYI, AKOS, 5820 Mezöhegyes (HU); BRATEC, Herve, 3012 WILSELE (BE); SIMONOVICS, JANOS, 7623 Pecs (HU)

(56) Entgegenhaltungen:
- EP-A1- 2 368 776
- DE-A1- 3 716 697
- DE-A1-102009 043 694
- DE-A1-102012 100 777
- US-A- 5 539 951

## Beschreibung

### Stand der Technik

Es ist bereits eine Wischblattvorrichtung mit zumindest einem Wischblattadapter zu einer Verbindung mit zumindest einem Wischarm, mit zumindest einer Federschiene und mit zumindest einer Wischleisteneinheit, welche zumindest eine Wischlippe und zumindest einen Wischflüssigkeitsausgabekanal aufweist, welcher zumindest ein Ausgabeelement zu einer Ausgabe von Wischflüssigkeit umfasst, vorgeschlagen worden. Eine gattungsgemäße Wischblattvorrichtung ist beispielsweise aus der DE 10 2012 100 777 A1 bekannt. Weiterer Stand der Technik ist aus der EP 2 368 776 A1, aus der DE 37 16 697 A1, sowie der US 5 539 951 A bekannt geworden.

### Offenbarung der Erfindung

Die Erfindung geht aus von einer Wischblattvorrichtung mit zumindest einem Wischblattadapter zu einer Verbindung mit zumindest einem Wischarm, mit zumindest einer Federschiene und mit zumindest einer Wischleisteneinheit, welche zumindest eine Wischlippe und zumindest einen Wischflüssigkeitsausgabekanal aufweist, welcher zumindest ein Ausgabeelement zu einer Ausgabe von Wischflüssigkeit umfasst.

Es wird vorgeschlagen, dass die zumindest eine Wischleisteneinheit zumindest einen Wischflüssigkeitszuleitungskanal zu einer Zuleitung von Wischflüssigkeit zu dem Wischflüssigkeitsausgabekanal umfasst, wobei sich der Wischflüssigkeitszuleitungskanal über zumindest einen wesentlichen Abschnitt des Wischflüssigkeitsausgabekanals neben dem Wischflüssigkeitsausgabekanal erstreckt.

Unter einer "Wischblattvorrichtung" soll in diesem Zusammenhang insbesondere zumindest ein Teil, insbesondere eine Unterbaugruppe, eines Wischblatts, insbesondere eines Scheibenwischblatts und vorteilhaft eines Fahrzeugscheibenwischblatts verstanden werden. Insbesondere kann die Wischblattvorrichtung auch das gesamte Wischblatt, insbesondere das gesamte Scheibenwischblatt und vorteilhaft das gesamte Fahrzeugscheibenwischblatt umfassen. Es ist denkbar, dass die Wischblattvorrichtung dabei zumindest als Teil eines Wischblatts in Flachbalkenbauweise und/oder zumindest als Teil eines Flachbalkenwischers und/oder als Wischblatt in Flachbalkenbauweise und/oder als Flachbalkenwischer ausgebildet ist. Vorzugsweise ist die Wischblattvorrichtung zu einem Einsatz an einem Fahrzeug vorgesehen. Vorzugsweise ist die Wischblattvorrichtung zu einer Reinigung einer Fläche, insbesondere einer Scheibe an einem Fahrzeug vorgesehen. Insbesondere ist die Wischblattvorrichtung zu einer Reinigung einer Fahrzeugscheibe mit einem Fahrzeug, insbesondere einem Wischarm eines Fahrzeugs gekoppelt. Unter "koppeln" soll in diesem Zusammenhang insbesondere formschlüssig und/oder kraftschlüssig verbinden verstanden werden. Unter "unverlierbar koppeln, befestigen oder verbinden" soll verstanden werden, dass zwei Bauteile so gekoppelt oder verbunden sind, dass die Kopplung oder Verbindung nicht ohne Werkzeuge gelöst werden kann. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Betriebszustand" soll in diesem Zusammenhang insbesondere ein Zustand verstanden werden, in dem die Wischblattvorrichtung betriebsbereit für einen Wischvorgang und/oder einen Wischbetrieb ist und/oder sich in einem Wischbetrieb befindet, in welchem die Wischleiste insbesondere über eine Fahrzeugscheibe geführt ist und dabei vorteilhaft an der Fahrzeugscheibe anliegt.

Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Bauteil, insbesondere Wischarmadapter, an einer zu reinigenden Fläche, insbesondere Fahrzeugscheibe, bereitzustellen. Unter einem "Wischarmadapter" soll in diesem Zusammenhang insbesondere ein Adapter verstanden werden, der einen Kontaktbereich zu einem Wischarmbauteil aufweist und mit dem Wischarmbauteil unverlierbar verbunden und dazu vorgesehen ist, einen Kopplungsbereich des Wischarmbauteils für eine Kopplung und/oder Kontaktierung mit einem Wischblattadapter bereitzustellen. Durch den Wischblattadapter und den Wischarmadapter ist die Wischblattvorrichtung vorzugsweise mit einem Fahrzeug, insbesondere einem Wischarm eines Fahrzeugs verbunden ausgebildet.

Unter einem "Wischarm" soll insbesondere eine Einheit des Scheibenwischers verstanden werden, welche dazu vorgesehen die, insbesondere durch den Wischblattadapter und/oder Wischarmadapter, an dem Wischarm befestigte Wischblattvorrichtung und insbesondere ein Wischblatt der Wischblattvorrichtung, zu einer Reinigung der Fahrzeugscheibe, über die Fahrzeugscheibe zu bewegen. Vorzugsweise ist der Wischarm an zumindest einer Antriebswelle eines Wischer-antriebs des Scheibenwischers des Fahrzeugs angeordnet. Insbesondere ist der Wischarm von dem Wischerantrieb zu einer Bewegung relativ zu der Fahrzeugscheibe antreibbar.

Unter einer "Wischleisteneinheit" soll insbesondere eine Einheit aus zumindest einem elastischen Material als Wischgrundkörper mit einer Wischlippe verstanden werden, die dazu vorgesehen ist, zu einer Reinigung einer zu reinigenden Fläche, insbesondere einer Scheibenfläche, vorzugsweise einer Fahrzeugscheibe, in einem Kontakt über die zu reinigende Fläche bewegt zu werden. Bevorzugt ist die Wischleisteneinheit aus einem natürlichen oder künstlichen Elastomer, insbesondere aus einem Kunststoff und/oder aus Gummi, hergestellt. Insbesondere kann die Wischleisteneinheit zumindest teilweise und vorzugsweise vollständig zumindest einen Federschienenkanal ausbilden. Denkbar ist, dass die Wischleisteneinheit einstückig mit der Wischlippe ausgebildet ist. Unter einer "Wischlippe" soll in diesem Zusammenhang insbesondere eine elastische Lippe verstanden werden, die dazu vorgesehen ist, mit einer Wischkante eine Scheibe, insbesondere eine Fahrzeugscheibe, zu überstreichen, zu wischen und/oder zu reinigen. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren und/oder Co-Extrusionsverfahren. Bevorzugt ist der Wischgrundkörper der Wischleisteneinheit dazu ausgebildet, eine Federschiene zu einer Stabilisierung aufzunehmen. Zur Aufnahme der Federschiene bildet die Wischereinheit insbesondere zumindest teilweise und vorzugsweise vollständig einen Federschienenkanal aus. Unter einem "Federschienenkanal" soll in diesem Zusammenhang insbesondere ein Kanal verstanden werden, der dazu vorgesehen ist, die Federschiene zumindest teilweise aufzunehmen. Insbesondere bildet die Wischleisteneinheit zumindest einen Federschienenkanal aus, welcher zu einer vollständigen Aufnahme der zumindest einen Federschiene vorgesehen ist. Durch den zumindest einen Federschienenkanal ist die zumindest eine Wischleisteneinheit mit der zumindest einen Federschiene verbindbar ausgebildet. Die Abmessungen des zumindest einen Federschienenkanals sind an die Form und Größe der zumindest einen Federschiene angepasst. Unter "an die Form und Größe [...] angepasst" soll in diesem Zusammenhang bevorzugt verstanden werden, dass der zumindest eine Federschienenkanal Abmessungen aufweist, welche den Abmessungen der zumindest einen Federschiene zumindest im Wesentlichen entspricht, dass der zumindest eine Federschienenkanal zu einer Aufnahme der zumindest einen Federschiene ausgebildet ist und, dass die zumindest eine Federschiene in einem montierten Zustand zumindest im Wesentlichen an der zumindest einen Wischereinheit anliegt. Unter "zumindest im Wesentlichen [...] anliegt" soll verstanden werden, dass die Oberfläche der zumindest einen Wischereinheit vorteilhaft zu mindestens 50 %, besonders vorteilhaft zu mindestens 70 % und ganz besonders vorteilhaft zu mindestens 80 % an einer Oberfläche der zumindest einen Federschiene anliegt. Vorteilhaft ist die Wischleisteneinheit formschlüssig, insbesondere kraftschlüssig mit der Federschiene verbunden. Unter "zumindest im Wesentlichen" soll in diesem Zusammenhang insbesondere verstanden werden, dass eine Abweichung von einem vorgegebenen Wert insbesondere weniger als 10 %, vorzugsweise weniger als 5 % und besonders bevorzugt weniger als 2 % des vorgegebenen Werts abweicht. Unter einem "montierten Zustand" soll in diesem Zusammenhang insbesondere ein Zustand verstanden werden, in dem die Wischblattvorrichtung betriebsbereit für einen Wischvorgang und/oder einen Wischbetrieb ist. Insbesondere ist die Wischblattvorrichtung in einem montierten Zustand an einem Wischarm angeordnet und/oder mit einem Wischarm gekoppelt, wobei insbesondere zwischen dem Wischarm und der Wischblattvorrichtung eine mechanische und/oder eine fluidtechnische Verbindung und/oder Kopplung besteht.

Unter einer "Federschiene" soll insbesondere ein makroskopisches Element verstanden werden, das zumindest eine Erstreckung aufweist, die in einem normalen Betriebszustand und/oder montierten Zustand um zumindest 10 %, insbesondere um wenigstens 20 %, vorzugsweise um mindestens 64 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Vorzugsweise ist die zumindest eine Federschiene zumindest teilweise aus einem Metall ausgebildet. Alternativ oder zusätzlich ist vorstellbar, dass die Federschiene zumindest teilweise aus einem Kunststoff, aus einem Verbundwerkstoff oder aus einem anderen, einem Fachmann als sinnvoll erscheinenden Material ausgebildet ist. Vorzugsweise ist die Federschiene zumindest teilweise aus einem Federstahl ausgebildet. Vorzugsweise weist die Federschiene in einem unbelasteten Zustand zumindest im Wesentlichen eine Form eines gebogenen Stabs und besonders vorteilhaft eines abgeflachten gebogenen Stabs auf. Weiterhin vorteilhaft ist die Federschiene einteilig ausgebildet. Alternativ kann die Federschiene auch mehrteilig ausgebildet sein. Besonders vorteilhaft ist eine Krümmung der Federschiene längs der Federschiene in einem unbelasteten Zustand größer als eine Krümmung einer Fahrzeugscheibenoberfläche eines Kraftfahrzeugs, insbesondere einer Fahrzeugscheibe, über welche die Federschiene in wenigstens einem Betriebszustand und/oder montierten Zustand geführt wird. Unter einem "elastischen Objekt" soll insbesondere ein Objekt verstanden werden, das wiederholt verformbar ist, ohne dass dadurch das Objekt mechanisch beschädigt oder zerstört wird, und das insbesondere nach einer Verformung selbstständig wieder einer Grundform zustrebt.

Die zumindest eine Wischleisteneinheit umfasst zumindest einen Wischflüssigkeitsausgabekanal. Unter einem "Wischflüssigkeitsausgabekanal" soll insbesondere eine kanalartige Ausnehmung in der zumindest einen Wischleisteneinheit verstanden werden, wobei die kanalartige Ausnehmung zur Führung eines Fluids, insbesondere der Wischflüssigkeit vorgesehen ist. Unter einer "kanalartigen Ausnehmung" soll insbesondere ein geometrisches Element verstanden werden, das in zumindest einem Betriebszustand und/oder montierten Zustand zu einer Durchführung eines Fluids, insbesondere von Wischflüssigkeit, vorgesehen ist. Unter der Wendung, dass der Wischflüssigkeitsausgabekanal in zumindest einem Betriebszustand und/oder montierten Zustand zu einer "Durchführung eines Fluids" vorgesehen ist, soll insbesondere verstanden werden, dass der Wischflüssigkeitsausgabekanal in dem Betriebszustand und/oder montierten Zustand dazu vorgesehen ist, das an einem Ende des Wischflüssigkeitsausgabekanals ankommende Fluid von dem einen Ende des Wischflüssigkeitsausgabekanals an ein dem einen Ende des Wischflüssigkeitsausgabekanals entgegengesetztes Ende des Wischflüssigkeitsausgabekanals zu transportieren, wobei das Fluid insbesondere den Wischflüssigkeitsausgabekanal durchströmt. Vorzugsweise ist die Wischblattvorrichtung dazu vorgesehen, Wischflüssigkeit in zumindest eine Wischrichtung abzugeben. Unter einer "Wischflüssigkeit" soll in diesem Zusammenhang insbesondere eine zum Waschen und/oder Reinigen einer Fahrzeugscheibe geeignete Flüssigkeit verstanden werden, wie insbesondere Wasser, Alkohole oder Gemische, die einen Wasseranteil, Frostschutzanteil und/oder Alkoholanteil aufweisen. Unter einer "Wischrichtung" soll vorteilhaft eine Richtung verstanden werden in welche sich das Wischblatt über eine Fläche, vorzugsweise eine Scheibe, insbesondere Fahrzeugscheibe, in zumindest einem Betriebszustand und/oder montierten Zustand bewegt. Insbesondere verläuft die Wischrichtung senkrecht zu einer Längserstreckung der Wischleisteneinheit, sowie parallel zur zu wischenden Fahrzeugscheibe. Darunter, dass die Wischrichtung nach oben/unten orientiert ist, soll insbesondere verstanden werden, dass die Wischrichtung zumindest eine in Bezug auf ein Fahrzeug nach oben/unten orientierte Bewegungskomponente aufweist. Vorzugsweise weist der Wischflüssigkeitsausgabekanal einen zumindest im Wesentlichen kreisförmigen Querschnitt auf. Alternativ ist denkbar, dass der Wischflüssigkeitsausgabekanal einen polygonalen, insbesondere zumindest im Wesentlichen quadratischen, Querschnitt, einen elliptischen Querschnitt oder einen anderen, einem Fachmann als sinnvoll erscheinenden Querschnitt aufweist. Bevorzugt wird der Wischflüssigkeitsausgabekanal von der Wischleisteneinheit begrenzt. Alternativ ist vorstellbar, dass der Wischflüssigkeitsausgabekanal beispielsweise von einem ein- oder mehrteiligen elastischen Schlauch und/oder einem ein- oder mehrteiligen Rohr in einer Ausnehmung in der Wischleisteneinheit ausgebildet ist. Denkbar sind auch andere einem Fachmann als sinnvoll erscheinende weitere Ausbildungsformen des Wischflüssigkeitsausgabekanals wie etwa eine gekoppelte Aneinanderreihung von Hohlräumen verschieden gearteter Bauteile der Wischleisteneinheit. Es ist denkbar, dass die Wischleisteneinheit zumindest zwei, insbesondere genau zwei, Wischflüssigkeitsausgabekanäle aufweist. Der zumindest eine Wischflüssigkeitsausgabekanal weist zumindest ein Ausgabeelement auf, welches zu einer Wischflüssigkeitsausgabe vorgesehen ist. Unter einem "Ausgabeelement" soll ein Element verstanden werden, welches zu einer Fluidausgabe vorgesehen ist. Das Ausgabeelement kann in Form einer Düse und/oder einer Öffnung ausgebildet sein. Denkbar sind viele einem Fachmann für eine Fluidausgabe, insbesondere Wischflüssigkeitsausgabe, als sinnvoll erscheinende Formen, um ein Ausgabeelement auszubilden. Vorzugsweise ist der zumindest eine Wischflüssigkeitsausgabekanal in einem Endbereich der Wischleisteneinheit senkrecht zur Haupterstreckungsrichtung der Wischleisteneinheit angeordnet. Vorzugsweise ist der zumindest eine Wischflüssigkeitsausgabekanal in einem Endbereich der Wischleisteneinheit senkrecht zur Haupterstreckungsrichtung der Wischleisteneinheit angeordnet, welcher insbesondere auf einer einem Fahrtwind abgewandten Seite am Fahrzeug angeordnet ist.

Die Wischleisteneinheit umfasst zumindest einen Wischflüssigkeitszuleitungskanal. Unter einem "Wischflüssigkeitszuleitungskanal" soll insbesondere eine kanalartige Ausnehmung in der zumindest einen Wischleisteneinheit, insbesondere in der Windabweisereinheit, verstanden werden, wobei die kanalartige Ausnehmung zur Führung eines Fluids, insbesondere Wischflüssigkeit vorgesehen ist. Der Wischflüssigkeitszuleitungskanal ist zu einer Kopplung mit dem Wischflüssigkeitsausgabekanal vorgesehen. Der Wischflüssigkeitszuleitungskanal ist dazu vorgesehen, Wischflüssigkeit zumindest teilweise von einem Wischflüssigkeitsreservoir zu der/in die Wischblattvorrichtung zu führen. Unter "zumindest teilweise [...] zu führen" soll verstanden werden, dass ein Objekt die Führung eines weiteren Objektes zumindest über einen Teil der Gesamtstrecke ausübt. Vorzugsweise weist der Wischflüssigkeitszuleitungskanal einen zumindest im Wesentlichen kreisförmigen Querschnitt auf. Alternativ ist denkbar, dass der Wischflüssigkeitszuleitungskanal einen polygonalen, insbesondere zumindest im Wesentlichen quadratischen, Querschnitt, einen elliptischen Querschnitt oder einen anderen, einem Fachmann als sinnvoll erscheinenden Querschnitt aufweist. Bevorzugt ist der Wischflüssigkeitszuleitungskanal von der Wischleisteneinheit begrenzt. Alternativ ist vorstellbar, dass der Wischflüssigkeitszuleitungskanal beispielsweise von einem ein- oder mehrteiligen elastischen Schlauch und/oder einem ein- oder mehrteiligen Rohr in einer Ausnehmung in der Wischleisteneinheit angeordnet ist. Denkbar sind auch andere einem Fachmann als sinnvoll erscheinende weitere Ausbildungsformen des Wischflüssigkeitszuleitungskanals wie etwa gekoppelte Aneinanderreihungen von Hohlräumen verschieden gearteter Bauteile der Wischleisteneinheit. Es ist denkbar, dass die Wischblattvorrichtung zumindest zwei, insbesondere genau zwei, Wischflüssigkeitszuleitungskanäle umfasst. Vorzugsweise ist der zumindest eine Wischflüssigkeitszuleitungskanal zumindest im Wesentlichen parallel zu dem zumindest einen Wischflüssigkeitsausgabekanal angeordnet. Der zumindest eine Wischflüssigkeitszuleitungskanal erstreckt sich über einen wesentlichen Abschnitt des zumindest einen Wischflüssigkeitsausgabekanals insbesondere zumindest im Wesentlichen parallel zu dem Wischflüssigkeitsausgabekanal. Unter "zich über einen wesentlichen Abschnitt erstrecken" soll verstanden werden, dass ein Objekt in eine Haupterstreckungsrichtung des Objekts zu mindestens 15 %, bevorzugt zu mindestens 25 %, besonders bevorzugt zu mindestens 40 % seiner Haupterstreckungslänge einer Haupterstreckungslänge eines weiteren Objekts entspricht. Unter einer "Haupterstreckungslänge" soll eine maximale Länge verstanden werden, die ein Objekt entlang der Haupterstreckungsrichtung aufweist. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung insbesondere eine Abweichung insbesondere kleiner als 8°, vorteilhaft kleiner als 5° und besonders vorteilhaft kleiner als 2° aufweist. Es ist denkbar, dass sich der zumindest eine Wischflüssigkeitszuleitungskanal über die gesamte Länge des zumindest einen Wischflüssigkeitsausgabekanal insbesondere zumindest im Wesentlichen parallel zu dem Wischflüssigkeitsausgabekanal erstreckt. Es ist weiterhin denkbar, dass sich der zumindest eine Wischflüssigkeitszuleitungskanal mit seiner gesamten Haupterstreckung parallel einer Haupterstreckung des zumindest einen Wischflüssigkeitsausgabekanals erstreckt. Vorzugsweise ist der zumindest eine Wischflüssigkeitszuleitungskanal in einem Endbereich der Wischleisteneinheit senkrecht zur Haupterstreckungsrichtung der Wischleisteneinheit angeordnet, welcher insbesondere auf einer einem Fahrtwind abgewandten Seite am Fahrzeug angeordnet ist.

Durch die erfindungsgemäße Ausgestaltung der Wischblattvorrichtung kann vorteilhaft eine Wischblattvorrichtung mit einer Wischleisteneinheit mit zumindest einem Wischflüssigkeitszuleitungskanal zu einer Zuleitung von Wischflüssigkeit zu dem Wischflüssigkeitsausgabekanal, welcher sich über zumindest einen wesentlichen Abschnitt des Wischflüssigkeitsausgabekanals neben dem Wischflüssigkeitsausgabekanal erstreckt, bereitgestellt werden. Insbesondere kann eine, insbesondere für einen Bediener, vorteilhaft einfach durchzuführende Verbindung und/oder Kopplung der Wischblattvorrichtung an eine Wischflüssigkeitsversorgung und/oder eine elektrische Energieversorgung realisiert werden. Durch die erfindungsgemäße Ausgestaltung der Wischblattvorrichtung kann insbesondere eine Wischblattvorrichtung bereitgestellt werden, welche zu einer Wischflüssigkeitsausgabe vorgesehen ist, die vorteilhaft zumindest im Wesentlichen unabhängig gegenüber einem Einfluss externer Luftströmungen, insbesondere bei einem fahrenden Fahrzeug, ausgebildet ist. Insbesondere kann dadurch eine vorteilhafte, insbesondere effiziente und/oder wischflüssigkeitssparende Reinigung einer Fahrzeugscheibe erfolgen.

Des Weiteren wird vorgeschlagen, dass die Wischblattvorrichtung zumindest eine Windabweisereinheit aufweist, welche zumindest im Wesentlichen in einer Umgebung des zumindest einen Wischflüssigkeitszuleitungskanals ausgebildet ist. Dadurch kann insbesondere eine optimierte Kontaktierung der Fahrzeugscheibe ermöglicht werden, wodurch vorteilhaft eine erhöhte Reinigungswirkung erzielt werden kann. Unter einer "Windabweisereinheit" soll in diesem Zusammenhang insbesondere eine Einheit verstanden werden, die dazu vorgesehen ist, eine auf die Wischblattvorrichtung wirkende Luftanströmung beziehungsweise einen Fahrtwind abzuweisen und/oder für ein Anpressen des Wischblatts auf eine zu wischende Oberfläche, insbesondere eine Fahrzeugscheibe, zu nutzen. Vorzugsweise besteht die Windabweisereinheit zumindest teilweise aus Gummi und/oder aus einem wenigstens teilelastischen Kunststoff. Bevorzugt weist die Windabweisereinheit zumindest eine konkave Anströmfläche auf. Die Windabweisereinheit ist insbesondere verschieden von einer Endkappe, einer Federschiene und/oder von einem Wischblattadapter ausgebildet. Vorteilhaft erstreckt sich die Windabweisereinheit in einem Betriebszustand und/oder montierten Zustand über zumindest einen Teil, vorzugsweise über zumindest einen Großteil einer Erstreckung der Wischblattvorrichtung entlang einer Haupterstreckungsrichtung der Federschiene, insbesondere des Wischblatts. Unter einer "Haupterstreckungsrichtung" eines Objektes soll eine Richtung verstanden werden, die parallel zu einer längsten Kantenlänge eines kleinsten Quaders verläuft, welcher das Objekt vollständig umfasst. Vorzugsweise ist die zumindest eine Windabweisereinheit zumindest einstückig, insbesondere einteilig, mit der zumindest einen Wischleisteneinheit ausgebildet. Vorzugsweise ist die Windabweisereinheit als Oberflächenstruktur der Wischleisteneinheit ausgebildet. Unter "zumindest im Wesentlichen in einer Umgebung [...] ausgebildet" soll vorzugsweise verstanden werden, dass ein Objekt zu mindestens 15 %, vorzugsweise zu mindestens 20 %, besonders bevorzugt zu mindestens 40 %, in einem Abstand von maximal 3 cm, vorzugsweise von maximal 2 cm, besonders bevorzugt von maximal 1 cm, von einem weiteren Objekt angeordnet ist. Alternativ ist denkbar, dass die Windabweisereinheit in einem Abstand von mehr als 3 cm zu dem Wischflüssigkeitszuleitungskanal angeordnet ist. Alternativ ist denkbar, dass die Windabweisereinheit separat von der Wischleisteneinheit ausgebildet ist. Alternativ ist denkbar, dass die Windabweisereinheit zu einem geringeren Teil als 15 % in einer Umgebung des Wischflüssigkeitszuleitungskanals angeordnet ist. Denkbar ist, dass der zumindest eine Wischflüssigkeitszuleitungskanal zumindest teilweise in der Windabweisereinheit angeordnet ist. Unter "zumindest teilweise in [...] angeordnet" soll verstanden werden, dass ein Objekt zu mindestens 15 %, bevorzugt zu mindestens 50 %, besonders bevorzugt zu mindestens 80 %, in einem weiteren Objekt angeordnet ist.

Ferner wird vorgeschlagen, dass der zumindest eine Wischflüssigkeitsausgabekanal einen seitlichen Endbereich aufweist, welcher zu einer Versorgung mit zumindest einer Wischflüssigkeit aus dem zumindest einen Wischflüssigkeitszuleitungskanal ausgebildet ist. Dadurch kann insbesondere eine fluidtechnische und/oder kompakte Verbindung zwischen dem Wischflüssigkeitsausgabekanal und Wischflüssigkeitszuleitungskanal hergestellt werden. Der zumindest eine Wischflüssigkeitsausgabekanal weist zumindest eine Einleitungsöffnung auf. Die zumindest eine Einleitungsöffnung ist vorzugsweise in einem Endbereich des zumindest einen Wischflüssigkeitsausgabekanals angeordnet. Der zumindest eine Wischflüssigkeitszuleitungskanal weist zumindest eine Weiterleitungsöffnung auf. Die zumindest eine Weiterleitungsöffnung ist vorzugsweise in einem seitlichen Endbereich des zumindest einen Wischflüssigkeitszuleitungskanals angeordnet. Unter einem "seitlichen Endbereich" soll vorzugsweise ein Bereich verstanden werden, der sich in einer Umgebung des Endes einer maximalen Erstreckung entlang der Haupterstreckungsrichtung eines Objektes, befindet. Vorzugsweise schließt der seitliche Endbereich eines Objektes einen Bereich des Objektes ein, der ausgehend von dem Ende einer maximalen Erstreckung des Objektes, insbesondere maximal 64 %, bevorzugt maximal 15 % und besonders bevorzugt maximal 10 % des Objektes entlang der Haupterstreckungsrichtung umfasst. Vorzugsweise ist die zumindest eine Einleitungsöffnung auf derselben Seite insbesondere der Wischleisteneinheit an dem Wischflüssigkeitsausgabekanal angeordnet wie die Weiterleitungsöffnung an dem Wischflüssigkeitszuleitungskanal. Vorzugsweise weist der Wischflüssigkeitsausgabekanal einen seitlichen Endbereich auf, in welchem sich die Einleitungsöffnung befindet. Alternativ ist denkbar, dass die Einleitungsöffnung in einem seitlichen Endbereich angeordnet ist, welcher dem Endbereich, in welchem die Weiterleitungsöffnung an dem Wischflüssigkeitszuleitungskanal ausgebildet ist, entgegengesetzt angeordnet ist. Alternativ ist auch denkbar, dass die Einleitungsöffnung in einem mittig gelegenen Bereich des Wischflüssigkeitsausgabekanals angeordnet ist. Unter einem "mittigen Bereich" eines Objekts soll vorzugsweise ein kugelförmiger Bereich in einer Umgebung des geometrischen Mittelpunktes des Objektes verstanden werden, wobei die kugelförmige Umgebung in zumindest einer Richtung eine Außenwand des Objekts zumindest teilweise einschließt. Vorzugsweise ist die Einleitungsöffnung dazu vorgesehen Wischflüssigkeit zu einer Versorgung des Wischflüssigkeitsausgabekanals mit Wischflüssigkeit aufzunehmen.

Zudem wird vorgeschlagen, dass die Wischblattvorrichtung zumindest eine Endkappe umfasst, welche eine Umleitung für eine Wischflüssigkeit aus dem zumindest einen Wischflüssigkeitszuleitungskanal in den zumindest einen Wischflüssigkeitsausgabekanal ausbildet. Dadurch können insbesondere der Wischflüssigkeitszuleitungskanal und der Wischflüssigkeitsausgabekanal vorteilhaft kostengünstig und/oder insbesondere sicher miteinander fluidtechnisch verbunden werden. Die Wischblattvorrichtung umfasst zumindest eine, vorteilhaft zumindest zwei Endkappen. Die Wischleisteneinheit bildet insbesondere zur Aufnahme der Endkappe zumindest teilweise, vorzugsweise zumindest zu einem Großteil und besonders bevorzugt vollständig einen Endabschnitt zur Aufnahme der Endkappe aus. Unter "zumindest zu einem Großteil" soll in diesem Zusammenhang insbesondere zu mehr als 50 %, bevorzugt zu mehr als 80 % und besonders bevorzugt zu mehr als 95 % verstanden werden. Unter einem "Endabschnitt" soll insbesondere ein Teilstück der Wischleisteneinheit und/oder des Wischblatts verstanden werden, welches insbesondere direkt mit einem freien Ende der Wischleisteneinheit in Verbindung steht und/oder das Ende der Wischleisteneinheit entlang ihrer Haupterstreckungsrichtung umfasst. Der Endabschnitt weist insbesondere eine Erstreckung auf, welche sich vorteilhaft über maximal 20 %, vorteilhaft maximal 15 %, vorzugsweise maximal 10 % und besonders bevorzugt maximal 5 % einer maximalen Längserstreckung der Wischblatt und/oder des Wischblatts und/oder der Wischblattvorrichtung erstreckt. Der Endabschnitt ist insbesondere ein Abschnitt der Wischleisteneinheit, welcher insbesondere dazu vorgesehen ist, die Endkappe zumindest teilweise aufzunehmen. Vorzugsweise ist der Endabschnitt zumindest frei von einer Windabweisereinheit. Vorzugsweise weist die Wischerleisteneinheit zumindest zwei Endabschnitte und besonders bevorzugt genau zwei Endabschnitte auf.

Unter einer "Endkappe" soll insbesondere ein Abdeckungsbauteil verstanden werden, welches insbesondere zumindest zum Abdecken eines freien Endes und insbesondere des Endabschnitts der Wischleisteneinheit vorgesehen ist. Die Endkappe ist insbesondere zusammen mit der Wischleisteneinheit und/oder der Federschiene zu einer Steckmontage vorgesehen. Die zumindest eine Endkappe ist in einem montierten Zustand in einem Endabschnitt der zumindest einen Wischleisteneinheit angeordnet. Eine Haupterstreckung der Endkappe weicht insbesondere von einer Erstreckung des Endabschnitts der Wischleisteneinheit längs des Federschienenkanals insbesondere um maximal 20 %, vorzugsweise um maximal 15 %, bevorzugt um maximal 10 % und besonders bevorzugt um maximal 5 % ab. Unter einer "Haupterstreckung" soll insbesondere eine Haupterstreckungslänge verstanden werden. Eine Haupterstreckung der Endkappe erstreckt sich insbesondere über maximal 50 mm, bevorzugt über maximal 25 mm, besonders bevorzugt über maximal 15 mm in eine Wischblattlängsrichtung der Erstreckung des Endabschnitts der Wischereinheit längs des Federschienenkanals. Insbesondere ist die Haupterstreckung der Endkappe größer als eine Erstreckung des Endabschnitts längs des Federschienenkanals. Insbesondere ist die Endkappe dazu vorgesehen, an einem Ende einer, insbesondere zwei, Federschiene/Federschienen befestigt zu werden. Die Endkappe ist insbesondere dazu vorgesehen, in einem montierten Zustand einen Endabschluss eines Wischblatts bereitzustellen. Vorzugsweise ist die Endkappe zumindest teilweise aus einem Kunststoff gebildet. Vorzugsweise umgreift die Endkappe in wenigstens einem montierten Zustand einen Teil der Federschiene/der Federschienen.

Vorzugsweise umfasst die Wischvorrichtung genau zwei Endkappen, jeweils eine für jedes Ende der Federschiene/der Federschienen und/oder der Wischleisteneinheit. Unter "längs zu einem Objekt" soll in diesem Zusammenhang insbesondere zumindest im Wesentlichen parallel zu einer Haupterstreckungsrichtung des Objekts verstanden werden. Insbesondere ist die Endkappe dazu vorgesehen, in zumindest einem Zustand zumindest eine Federschiene und/oder zumindest eine Wischleisteneinheit in zumindest einer Position zu halten. Die Endkappe ist in einem montierten Zustand mit der zumindest einen Wischleisteneinheit durch die zumindest eine Federschiene verbunden. Vorzugsweise ist die Endkappe in einem montierten Zustand mit der zumindest einen Wischleisteneinheit durch die zumindest eine Federschiene unverlierbar verbunden. Weiterhin bevorzugt weist die Wischblattvorrichtung zumindest zwei Endkappen auf. Insbesondere sind die zumindest zwei Endkappen jeweils an insbesondere bezüglich der Haupterstreckungsrichtung des Wischblatts, der Federschiene/Federschienen und/oder der Wischleisteneinheit gegenüberliegenden freien Endabschnitten des Wischblatts, der Federschiene/Federschienen und/oder der Wischleisteneinheit angeordnet. Vorzugsweise ist die zumindest eine Endkappe dazu vorgesehen, eine Wischflüssigkeitsleitung zwischen der Einleitungsöffnung des Wischflüssigkeitsausgabekanals und der Weiterleitungsöffnung des Wischflüssigkeitszuleitungskanals auszubilden. Vorzugsweise umfasst die Endkappe zumindest einen Fluidkanal, welcher in seiner Funktionsweise dem Wischflüssigkeitszuleitungskanal gleicht. Vorzugsweise ist der Fluidkanal der Endkappe zu einer fluiddichten Steckverbindung mit der Weiterleitungsöffnung des Wischflüssigkeitszuleitungskanals und der Einleitungsöffnung des Wischflüssigkeitsausgabekanals vorgesehen. Denkbar ist, dass die Endkappe, insbesondere der Fluidkanal der Endkappe, in einem montierten Zustand an der Wischleiste kraftschlüssig, insbesondere formschlüssig und/oder stoffschlüssig, befestigt ist. Vorzugsweise ist die zumindest eine Endkappe dazu vorgesehen, den zumindest einen Wischflüssigkeitsausgabekanal mit Wischflüssigkeit zu versorgen und jeden denkbaren weiteren als Wischflüssigkeitsausgabekanal ausgebildeten Kanal oder dgl. fluiddicht zu verschließen. Vorzugsweise ist zumindest ein Teil des Fluidkanals in zumindest einem Endbereich senkrecht zur Haupterstreckungsrichtung der Wischleisteneinheit angeordnet.

Nach der Erfindung wird vorgeschlagen, dass die zumindest eine Wischleisteneinheit zumindest einen weiteren Wischflüssigkeitskanal, welcher getrennt von dem zumindest einen Wischflüssigkeitsausgabekanal und getrennt von dem zumindest einen Wischflüssigkeitszuleitungskanal ausgebildet ist, umfasst. Dadurch kann insbesondere eine vorteilhaft hohe und/oder schnelle Wischflüssigkeitszufuhr ermöglicht werden, wodurch insbesondere eine schelle Reinigung der Fahrzeugscheibe erfolgen kann. Vorzugsweise gleicht der weitere Wischflüssigkeitskanal in seiner Funktionsweise dem Wischflüssigkeitszuleitungskanal und/oder dem Wischflüssigkeitsausgabekanal. Der zumindest eine weitere Wischflüssigkeitskanal der zumindest einen Wischleisteneinheit ist vorzugsweise parallel zu dem zumindest einen Wischflüssigkeitsausgabekanal angeordnet. Der zumindest eine weitere Wischflüssigkeitskanal der zumindest einen Wischleisteneinheit ist vorzugsweise parallel zu dem zumindest einen Wischflüssigkeitszuleitungskanal angeordnet. Vorzugsweise erstreckt sich der zumindest eine weitere Wischflüssigkeitskanal über einen Abschnitt des Wischflüssigkeitsausgabekanals und/oder der Wischleisteneinheit. Es ist denkbar, dass der zumindest eine weitere Wischflüssigkeitskanal und/oder der Wischflüssigkeitsausgabekanal und/oder der Wischflüssigkeitszuleitungskanal zumindest teilweise außerhalb der Wischleisteneinheit angeordnet ist/sind. Unter "zumindest teilweise außerhalb angeordnet" soll verstanden werden, dass ein Objekt zu mindestens 15 %, bevorzugt zu mindestens 25 %, besonders bevorzugt zu mindesten 50 % außerhalb eines anderen Objektes angeordnet ist. Vorteilhaft kann durch einen weiteren Wischflüssigkeitskanal, welcher gleich dem zumindest einen Wischflüssigkeitsausgabekanal ausgebildet ist, eine Wischflüssigkeitsabgabe in zumindest zwei verschiedene Richtungen, insbesondere Wischrichtungen, realisiert werden. Alternativ ist vorstellbar, dass der zumindest eine weitere Wischflüssigkeitskanal im selben Endbereich entlang der Wischleisteneinheit angeordnet ist wie der zumindest eine Wischflüssigkeitsausgabekanal. Vorteilhaft kann eine Wischflüssigkeitsabgabe in eine Wischrichtung homogenisiert und/oder speziell angepasst, insbesondere dosiert und/oder gerichtet, werden. Insbesondere kann der weitere Wischflüssigkeitskanal als ein weiterer Wischflüssigkeitsausgabekanal und/oder als ein weiterer Wischflüssigkeitszuleitungskanal und/oder als ein Wischflüssigkeitszuleitungsteilkanal ausgebildet sein. Insbesondere kann der weitere Wischflüssigkeitskanal insbesondere fluidtechnisch mit dem Wischflüssigkeitszuleitungskanal verbunden sein. Insbesondere können der weitere Wischflüssigkeitskanal und der Wischflüssigkeitszuleitungskanal einstückig ausgebildet sein. Insbesondere kann der weitere Wischflüssigkeitskanal insbesondere fluidtechnisch mit dem Wischflüssigkeitsausgabekanal verbunden sein. Insbesondere können der weitere Wischflüssigkeitskanal und der Wischflüssigkeitsausgabekanal und/oder der weitere Wischflüssigkeitsausgabekanal einstückig ausgebildet sein.

Nach der Erfindung wird vorgeschlagen, dass die Wischblattvorrichtung zumindest ein Wege-Ventil umfasst, welches dazu vorgesehen ist, eine Wischflüssigkeitsausgabe auszurichten, und welches in einem Verbindungsbereich zwischen dem zumindest einen Wischarm und der zumindest einen Wischleisteneinheit angeordnet ist. Vorzugsweise ist das zumindest eine Wege-Ventil dazu vorgesehen, eine Wischflüssigkeitsausgaberichtung zu steuern. Dadurch kann insbesondere eine bedarfs- und/oder ortsgerechte Steuerung einer Wischflüssigkeitszufuhr ermöglicht werden, wodurch vorteilhaft eine sparsame Wischflüssigkeitszufuhr stattfinden kann. Vorzugsweise ist das zumindest eine Wege-Ventil zumindest teilweise in dem zumindest einen Wischflüssigkeitszuleitungskanal angeordnet. Denkbar ist, dass das zumindest eine Wege-Ventil zumindest teilweise in dem zumindest einen Wischblattadapter angeordnet ist. Alternativ ist denkbar, dass das zumindest eine Wege-Ventil zumindest teilweise außerhalb der Wischblattvorrichtung, insbesondere an einem Wischarm, angeordnet ist. Vorzugsweise ist das Wege-Ventil als Drei-Wege-Ventil ausgebildet. Vorzugsweise ist das Wege-Ventil als Drei-Wege-Ventil mit einem Fluideingang und zwei Fluidausgängen ausgebildet. Vorzugsweise erstreckt sich der zumindest eine Wischflüssigkeitszuleitungskanal über die gesamte Haupterstreckungslänge der Wischleisteneinheit.

Vorzugsweise unterteilt das Wege-Ventil den zumindest einen Wischflüssigkeitszuleitungskanal in zumindest zwei Wischflüssigkeitszuleitungsteilkanäle. Vorzugsweise leitet das zumindest eine Wege-Ventil Wischflüssigkeit in zumindest einem Betriebszustand und/oder montierten Zustand in zumindest einen Wischflüssigkeitszuleitungsteilkanal. Vorzugsweise leitet jeder der Wischflüssigkeitszuleitungsteilkanäle Wischflüssigkeit in einen entgegengesetzten Endbereich der Wischleisteneinheit. Vorzugsweise umfasst jeder der zumindest zwei Wischflüssigkeitszuleitungsteilkanäle zumindest eine Weiterleitungsöffnung in einem Endbereich der Wischleisteneinheit. Vorzugsweise sind die Weiterleitungsöffnungen der Wischflüssigkeitszuleitungsteilkanäle mit Fluidkanälen der Endkappen fluiddicht gekoppelt. Vorzugsweise leiten die Endkappen die Wischflüssigkeit in/zu verschiedene/n Ausgabeelemente/n. Vorzugsweise leitet eine Endkappe die Wischflüssigkeit aus einem Wischflüssigkeitszuleitungsteilkanal in den Wischflüssigkeitsausgabekanal und die weitere Endkappe die Wischflüssigkeit aus einem Wischflüssigkeitszuleitungsteilkanal in den weiteren Wischflüssigkeitskanal und/oder weiteren Wischflüssigkeitsausgabekanal, insbesondere zu einer Ausgabe der Wischflüssigkeit in verschiedene Wischrichtungen. Es ist denkbar, dass das Wege-Ventil nur einen Ausgang aufweist. In diesem Fall ist das Wege-Ventil als Durchlassventil für nur eine Ausgaberichtung für Wischflüssigkeit vorgesehen.

Des Weiteren wird vorgeschlagen, dass die Wischblattvorrichtung einen Heizdraht aufweist, welcher in der zumindest einen Wischleisteneinheit angeordnet ist. Vorzugsweise weist die Wischblattvorrichtung zumindest einen, insbesondere zumindest drei, bevorzugt genau drei, Heizdraht/Heizdrähte auf. Vorzugsweise ist der zumindest eine Heizdraht in der Wischleisteneinheit angeordnet. Vorzugsweise ist der Heizdraht dazu vorgesehen, die Wischleisteneinheit zu temperieren. Vorzugsweise ist der zumindest eine Heizdraht dazu vorgesehen, elektrische Energie in Wärmenergie umzuwandeln. Vorzugsweise ist der zumindest eine Heizdraht als Heizwiderstand ausgebildet. Vorzugsweise ist der zumindest eine Heizdraht formschlüssig mit der zumindest einen Wischleisteneinheit verbunden. Vorzugsweise ist der zumindest eine Heizdraht co-extrudiert mit der zumindest einen Wischleisteneinheit ausgebildet. Vorzugsweise erstreckt sich der zumindest eine Heizdraht über die gesamte Haupterstreckungslänge der zumindest einen Wischleisteneinheit. Vorzugsweise ist der zumindest eine Heizdraht an einer der Wischlippe zugewandten Seite der Wischleisteneinheit angeordnet. Vorzugsweise sind zumindest drei Heizdrähte um einen Befestigungsbereich der Wischlippe an dem zumindest einen Wischgrundkörper angeordnet. Vorzugsweise ist der zumindest eine Heizdraht unterhalb des Federschienenkanals in dem Wischgrundkörper der Wischleisteneinheit angeordnet. Vorzugsweise ist der zumindest eine Heizdraht mit einer zumindest im Wesentlichen quaderförmigen Außenkontur ausgebildet. Unter "zumindest im Wesentlichen quaderförmig" soll verstanden werden, dass die Außenkontur eines Objekts mit einem kleinsten Quader, der das Objekt vollständig umschließt eine kleinere Volumendifferenz aufweist als mit einem kleinsten Zylinder, einer kleinsten Kugel, einem kleinsten Würfel, oder einer kleinsten Pyramide. Es ist denkbar, dass der zumindest eine Heizdraht eine Außenkontur aufweist, welche im Wesentlichen zylinderförmig ist. Unter "zumindest im Wesentlichen zylinderförmig" soll verstanden werden, dass die Außenkontur eines Objekts mit einem kleinsten Zylinder, der das Objekt vollständig umschließt eine kleinere Volumendifferenz aufweist als mit einem kleinsten Quader, einer kleinsten Kugel, einem kleinsten Würfel, oder einer kleinsten Pyramide. Vorzugsweise ist zumindest ein Heizdraht so angeordnet, dass seine Haupterstreckungsebene zumindest im Wesentlichen parallel zu der Haupterstreckungsebene der zumindest einen Federschiene angeordnet ist. Unter einer "Haupterstreckungsebene" soll eine Ebene verstanden werden, welche parallel zu einer größten Außenfläche eines kleinsten Quaders verläuft, der ein Objekt vollständig umgibt. Vorzugsweise sind zwei Heizdrähte so angeordnet, dass ihre Haupterstreckungsebene zumindest im Wesentlichen senkrecht zu der Haupterstreckungsebene der Federschiene angeordnet ist. Unter "zumindest im Wesentlichen senkrecht" soll vorzugsweise verstanden werden, dass eine Richtung oder eine Ebene bis auf eine Abweichung von maximal 64 °, bevorzugt maximal 10 °, besonders bevorzugt maximal 5 ° zu einer Bezugsrichtung oder Ebene ausgerichtet ist. Vorteilhaft ist der Heizdraht dazu vorgesehen, ein Temperieren zumindest der zumindest einen Wischlippe auf eine Temperatur durchzuführen, bei welcher ein Wischvorgang durchführbar ist, insbesondere bei welcher eine Flexibilität eines Wischlippengummis für einen Wischvorgang gewährleistet ist. Dadurch kann insbesondere eine Reinigung der Fahrzeugscheibe insbesondere bei Außentemperaturen von unter 0°C und/oder unter einem Gefrierpunkt von Wasser beschleunigt und/oder verbessert werden.

Außerdem wird vorgeschlagen, dass die zumindest eine Endkappe zumindest ein Rücklaufventil umfasst, welches dazu vorgesehen ist, die zumindest eine Wischflüssigkeit zumindest teilweise zurückzuhalten. Dadurch kann insbesondere eine Strömungsrichtung der Wischflüssigkeit kontrolliert werden, wodurch insbesondere eine Strömung der Wischflüssigkeit optimiert werden kann. Vorteilhaft kann dadurch erreicht werden, dass die Reaktionsgeschwindigkeit, mit welcher eine Wischflüssigkeitsabgabe nach Betätigung einer Schaltung zur Wischflüssigkeitsausgabe zumindest im Wesentlichen zeitverlustfrei erfolgt. Unter "zumindest im Wesentlichen zeitverlustfrei" soll insbesondere verstanden werden, dass die Wischflüssigkeit zu einer Wischflüssigkeitsausgabe lediglich einen Weg von dem Rücklaufventil in der Endkappe bis zu einem Ausgabeelement beispielsweise im Wischflüssigkeitsausgabekanal, wobei ein kürzester Weg bei gleichem Druck, insbesondere gleicher Geschwindigkeit, eine kürzeste Zeitspanne bedeutet. Das zumindest eine Rücklaufventil ist vorzugsweise in dem zumindest einen Fluidkanal einer Endkappe angeordnet. Es ist denkbar, dass das zumindest eine Rücklaufventil an einem dem Wischflüssigkeitsausgabekanal, dem weiteren Wischflüssigkeitskanal und/oder weiteren Wischflüssigkeitsausgabekanal, welcher insbesondere mit der Funktionsweise eines Wischflüssigkeitsausgabekanals ausgebildet ist, zugewandten Ende eines Fluidkanals in der Endkappe angeordnet ist. Vorzugsweise ist das zumindest eine Rücklaufventil an einem dem Wischflüssigkeitsausgabekanal, dem weiteren Wischflüssigkeitskanal und/oder weiteren Wischflüssigkeitsausgabekanal abgewandten Ende eines Fluidkanals in der Endkappe angeordnet. Vorzugsweise kann ein Rücklaufventil zumindest teilweise mit einem Durchmesser ausgebildet sein, welcher dem Durchmesser des Wischflüssigkeitszuleitungskanals gleicht. Vorteilhaft ist ein zugängliches, insbesondere austauschbares, Rücklaufventil in der Endkappe angeordnet. Es ist denkbar, dass zwei oder mehrere, insbesondere von eins unterschiedliche, wie etwa drei, vier oder dgl. Rücklaufventile in einer Endkappe angeordnet sind. Das zumindest eine Rücklaufventil ist vorzugsweise als mechanisches Rücklaufventil ausgebildet. Es ist denkbar, dass das zumindest eine Rücklaufventil als elektrisches und/oder elektronisches Rücklaufventil ausgebildet ist.

Zudem wird vorgeschlagen, dass der zumindest eine Wischflüssigkeitszuleitungskanal in einem montierten Zustand einen Versorgungsbereich in einer Umgebung des Wischblattadapters aufweist, welcher zu einer Versorgung des Wischflüssigkeitszuleitungskanals mit Wischflüssigkeit ausgebildet ist. Dadurch kann insbesondere eine sichere und/oder kosteneffiziente fluidtechnische Verbindung bereitgestellt werden. Unter einem "Versorgungsbereich" soll vorzugsweise ein Bereich des Wischflüssigkeitszuleitungskanals verstanden werden, in welchem der Wischflüssigkeitszuleitungskanal mit Wischflüssigkeit versorgbar ist. Denkbar ist, dass der Wischflüssigkeitszuleitungskanal in einem mittig gelegenen Bereich mit Wischflüssigkeit versorgbar ist. Alternativ ist denkbar, dass der Wischflüssigkeitszuleitungskanal in einem seitlichen Bereich, insbesondere in einem Endbereich seiner Haupterstreckung, mit Wischflüssigkeit versorgbar ist. Alternativ ist ebenfalls denkbar, dass der Wischflüssigkeitskanal und/oder weitere Wischflüssigkeitsausgabekanal in einem beliebigen Bereich zwischen dem Endbereich und seinem geometrisch mittig gelegenen Bereich mit Wischflüssigkeit versorgbar ist, insbesondere weil der Kanal vorzugsweise zylindrische Außenkonturen aufweist und symmetrisch ausgebildet ist. Es ist denkbar, dass der Wischflüssigkeitszuleitungskanal asymmetrisch, insbesondere mit einem geometrisch mittig gelegenen Teil, welcher ein größeres Volumen aufweist als der Endbereich entlang der Haupterstreckungsrichtung, ausgebildet ist. Der Versorgungsbereich des Wischflüssigkeitszuleitungskanals ist vorzugsweise in einer Umgebung des zumindest einen Wischblattadapters angeordnet. Es ist denkbar, dass mehrere Versorgungsbereiche in der Umgebung/den Umgebungen von zumindest einem Wischblattadapter angeordnet sind. Vorteilhaft kann ein homogenes Strömungsbild/ein homogener Fluidfluss erreicht werden. Vorzugsweise umfasst der Wischblattadapter zumindest ein Element zur Wischflüssigkeitsleitung in den zumindest einen Wischflüssigkeitszuleitungskanal. Es ist denkbar, dass der Versorgungsbereich zumindest einen als T-Stück ausgebildeten Bereich aufweist. Unter einem "als T-Stück ausgebildeten Bereich" soll ein Bereich verstanden werden, welcher einen Fluidfluss aus einem fluidführenden Element mit einer Flussrichtung in zumindest ein Element mit zumindest zwei Flussrichtungen überführt und/oder zumindest zwei Elemente mit jeweils zumindest einer Flussrichtung überführt. Insbesondere ist denkbar, dass das zumindest eine Wege-Ventil in dem Versorgungsbereich angeordnet ist. Es ist auch denkbar, dass das zumindest eine Wege-Ventil in einem als T-Stück ausgebildeten Bereich insbesondere des Wischflüssigkeitszuleitungskanals angeordnet ist.

Außerdem wird vorgeschlagen, dass der zumindest eine Wischblattadapter als ein Side-Lock Adapter ausgebildet ist, welcher zu einer Kopplung der Wischblattvorrichtung mit zumindest einer Wischflüssigkeitsleitung und mit zumindest einer elektrischen Energieversorgungseinheit vorgesehen ist. Dadurch kann insbesondere eine platzsparende Bauweise ermöglicht werden. Vorzugsweise ist der zumindest eine Wischblattadapter, der als ein Side-Lock Adapter ausgebildet ist, zu einer Wischflüssigkeitsleitung mit einem Fluidaufnahmeelement, insbesondere Fluidsteckplatz, ausgebildet. Unter einem "Side-Lock Adapter" soll vorzugsweise ein Adapter verstanden werden, welcher zumindest ein Befestigungselement aufweist, welches in einem montierten Zustand seitlich an der Wischblattvorrichtung angeordnet ist und/oder eine Kopplung und/oder Verbindung zu/mit einem Objekt, Element und/oder einer Einheit herstellt. Unter "seitlich an der Wischblattvorrichtung" soll eine Seite eines kleinsten Quaders, welcher die Wischblattvorrichtung vollständig umgibt, verstanden werden, welche Flächennormalen aufweist, die senkrecht zu einer Flächennormalen der Seite angeordnet ist, welche der Wischlippe der Wischblattvorrichtung am nächsten liegt. Vorzugsweise ist der Wischblattadapter in einem mittigen Bereich der Wischleisteneinheit angeordnet. Vorzugsweise ist das zumindest eine Wege-Ventil in dem zumindest einem Side-Lock Adapter angeordnet. Es ist denkbar, dass der als Side-Lock Adapter ausgebildete Wischblattadapter Befestigungselemente, wie beispielsweise Führungselemente, Hakenelemente und/oder Fixierelemente umfasst, welche zu einer Befestigung eines Wischarmadapters ausgebildet sind. Unter einem "Hakenelement" soll vorzugsweise ein Teil eines Objektes verstanden werden, welcher in einem montierten Zustand an einem weiteren Objekt zu einer unverlierbaren Befestigung an dem weiteren Objekt vorgesehen ist. Unter einem "Fixierelement" soll vorzugsweise ein Teil eines Objektes verstanden werden, welches zumindest teilweise in einem montierten Zustand von zumindest einem Teil eines weiteren Objektes umgeben wird und/oder zumindest einen Teil zumindest eines weiteren Objektes zumindest teilweise umgibt. Unter einem "Führungselement" soll vorzugsweise ein Element verstanden werden, welches ein Positionieren eines Objektes zur Befestigung an einem weiteren Objekt erleichtern soll. Alternativ ist denkbar, dass der Wischblattadapter als ein Top-Lock Adapter ausgebildet ist, wobei zumindest ein Befestigungselement in einem montierten Zustand senkrecht zu einem äquivalenten Befestigungselement in einer Side-Lock Konfiguration angeordnet ist. Unter einem "äquivalenten Befestigungselement" soll in diesem Zusammenhang vorzugsweise ein Bauteil verstanden werden, welches eine gleiche Funktion, insbesondere die Hauptbefestigung des Adapters, ausführt. Vorzugsweise ist das zumindest eine Befestigungselement des Wischblattadapters als Fluidaufnahmeelement ausgebildet. Es ist denkbar, dass das zumindest eine Fluidaufnahmeelement separat zu dem Befestigungselement ausgebildet ist.

Des Weiteren wird vorgeschlagen, dass der zumindest eine Wischblattadapter ein Stiftaufnahmeelement umfasst, welches dazu vorgesehen ist eine fluidtechnische Verbindung zur Versorgung der Wischblattvorrichtung mit der zumindest einen Wischflüssigkeitsleitung auszubilden. Vorzugsweise ist das zumindest eine Befestigungselement des Wischblattadapters als Stiftaufnahmeelement ausgebildet. Vorzugsweise ist das zumindest eine Befestigungselement des Wischblattadapters als Stiftaufnahmeelement zur Aufnahme zumindest eines Befestigungselements eines Wischarmadapters ausgebildet. Vorzugsweise ist das Stiftaufnahmeelement zu einer fluidtechnischen Verbindung zur Versorgung der Wischblattvorrichtung mit der zumindest einen Wischflüssigkeit vorgesehen. Unter einer "fluidtechnischen Verbindung" soll eine Verbindung verstanden werden, welche vorzugsweise fluiddicht ausgebildet ist und insbesondere druckresistent ausgebildet ist. Dadurch kann insbesondere eine stabile Verbindung geschaffen werden.

Zudem wird vorgeschlagen, dass der Wischblattadapter zumindest eine Steckverbindung zu einer elektrischen Energieversorgung aufweist, welche insbesondere getrennt von dem zumindest einen Stiftaufnahmeelement ausgebildet ist. Dadurch kann insbesondere eine werkzeugfreie Montage ermöglicht werden, wodurch eine Bedienerfreundlichkeit erhöht werden kann. Vorzugsweise ist der zumindest eine Wischblattadapter mit einer elektrischen Energieversorgungseinheit mit vorzugsweise einer Steckverbindung, insbesondere Elektrosteckverbindung, verbunden. Die Steckverbindung ist dazu vorgesehen, insbesondere elektrische Energie für eine Steuerung oder Regelung des zumindest einen Heizdrahtes und/oder des zumindest einen Wege-Ventils aufzunehmen und/oder weiterzuleiten. Vorzugsweise ist die zumindest eine Steckverbindung zu einer elektrischen Energieversorgung zumindest des zumindest einen Wischblattadapters vorgesehen. Vorzugsweise ist die zumindest eine Steckplatzverbindung zu einer elektrischen Energieversorgung für das zumindest eine Wege-Ventil vorgesehen. Vorzugsweise umfasst die Steckverbindung des zumindest einen Wischblattadapters zumindest einen, insbesondere zumindest vier, Steckpin/Steckpins. Vorzugsweise ist die Steckverbindung getrennt von dem Stiftaufnahmeelement ausgebildet. Vorzugsweise ist die Steckverbindung zu einer Verbindung vorgesehen, welche zumindest im Wesentlichen senkrecht zu der Verbindung des Stiftaufnahmeelements ausgerichtet ist. Unter "einer Verbindung, die zumindest im Wesentlichen senkrecht zu einer weiteren Verbindung ausgerichtet ist" soll vorzugsweise verstanden werden, dass die Bewegung, die zu einer ersten Verbindung führt, eine Richtung aufweist, welche zumindest im Wesentlichen senkrecht zu einer Richtung einer Bewegung ausgerichtet ist, die zu einer weiteren Verbindung führt.

Außerdem wird ein Wischersystem mit einer erfindungsgemäßen Wischblattvorrichtung mit zumindest einem Wischarmadapter vorgeschlagen, welcher zumindest einen Verbindungsstift aufweist, der zu einer fluidtechnischen Verbindung des Wischarmadapters mit dem Stiftaufnahmeelement des Wischblattadapters ausgebildet ist. Dadurch kann insbesondere eine einfache konstruktive Lösung zur Versorgung der Wischblattvorrichtung mit einer Wischflüssigkeit bereitgestellt werden. Vorzugsweise ist der Verbindungsstift mit einer zumindest im Wesentlichen zylinderförmigen Außenkontur ausgebildet. Vorzugsweise ist das zumindest eine Stiftaufnahmeelement an die Form und Größe des zumindest einen Verbindungsstifts angepasst.

Des Weiteren wird vorgeschlagen, dass der Verbindungsstift zumindest ein Federelement umfasst. Vorzugsweise ist der Verbindungsstift zu einer Befestigung insbesondere des Wischarmadapters in einer Befestigungsstellung an dem Stiftaufnahmeelement des Wischblattadapters angeordnet. Vorzugsweise ist der Verbindungsstift durch das Federelement aus der Befestigungsstellung in eine Fixstellung bewegbar ausgebildet. Vorzugsweise ist der Verbindungsstift in einer Fixstellung mit dem Stiftaufnahmeelement, insbesondere zu einer Wischflüssigkeitsleitung, gekoppelt. Dadurch kann insbesondere eine sichere Arretierung des Verbindungsstifts in der Befestigungsstellung ermöglicht werden.

Die erfindungsgemäße Wischblattvorrichtung soll hierbei nicht auf die oben beschriebene Anwendung und Ausführungsform beschränkt sein. Insbesondere kann die erfindungsgemäße Wischblattvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil einer Fahrzeugscheibe und einen an der Fahrzeugscheibe angeordneten Scheibenwischer mit einem Wischblattsystem mit einer erfindungsgemäßen Wischblattvorrichtung,
- Fig. 2: eine erfindungsgemäße Wischblattvorrichtung in einer Schnittdarstellung,
- Fig. 3: die Wischleisteneinheit in einer Schnittdarstellung mit einem Wischflüssigkeitsausgabekanal der Wischleisteneinheit und einem weiteren Wischflüssigkeitsausgabekanal der Wischleisteneinheit,
- Fig. 4: die Wischblattvorrichtung in mehreren Schnittdarstellungen mit einer schematischen Darstellung einer Strömung von Wischwasser durch eine Wischleisteneinheit der Wischblattvorrichtung,
- Fig. 5: einen Teil der Wischblattvorrichtung mit einem als Drei-Wege-Ventil ausgebildeten Wege-Ventil der Wischblattvorrichtung in einer Schnittdarstellung mit dem geöffneten zweiten Wischflüssigkeitszuleitungsteilkanal,
- Fig. 6: einen Teil der Wischblattvorrichtung mit dem als Drei-Wege-Ventil ausgebildeten Wege-Ventil der Wischblattvorrichtung in einer Schnittdarstellung mit dem geöffneten ersten Wischflüssigkeitszuleitungsteilkanal,
- Fig. 7: einen Teil eines an einem Wischblattadapter der Wischblattvorrichtung gekoppelten Wischarmadapters der Wischblattvorrichtung mit einem Federelement des Wischarmadapters,
- Fig. 8: einen Teil des Wischblattadapters mit einem Stiftaufnahmeelement des Wischblattadapters sowie mit einer Steckverbindung des Wischblattadapters,
- Fig. 9: eine perspektivische Darstellung des Wischarmadapters von unten mit einem Verbindungsstift des Wischarmadapters sowie mit einer korrespondierende Steckverbindung des Wischarmadapters und
- Fig. 10: eine schematische Darstellung eines erfindungsgemäßen Verfahrens.

### Beschreibung des Ausführungsbeispiels

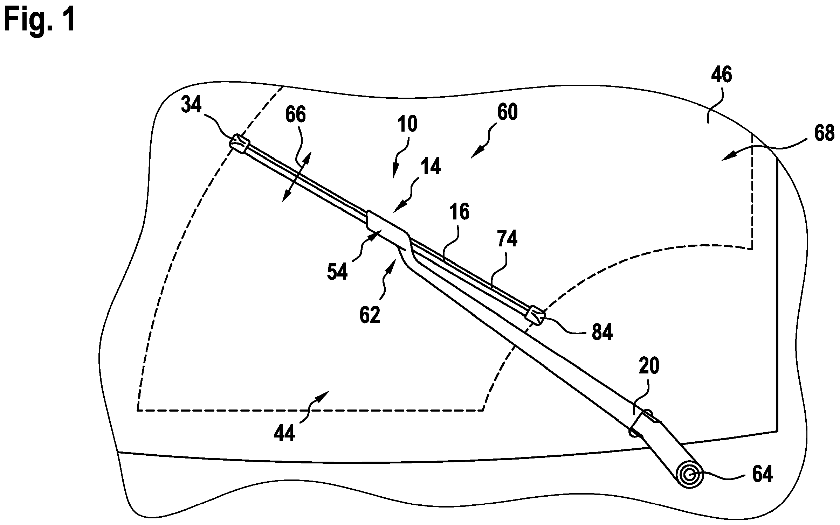

Figur 1 zeigt einen Teil einer Fahrzeugscheibe 46 eines Fahrzeugs und einen an der Fahrzeugscheibe 46 angeordneten Scheibenwischer 44. Der Scheibenwischer 44 ist zu einer Reinigung der Fahrzeugscheibe 46 vorgesehen. Die Fahrzeugscheibe 46 ist als eine Front- und/oder Heckscheibe ausgebildet.

Der Scheibenwischer 44 weist ein Wischblatt 74 mit einem Wischblattsystem 60 auf. Das Wischblattsystem 60 weist eine erfindungsgemäße Wischblattvorrichtung 10 auf. Die Wischblattvorrichtung 10 ist zu einem Einsatz an einem Fahrzeug, insbesondere einem Kraftfahrzeug, vorgesehen.

Der Scheibenwischer 44 weist einen Wischarm 20 auf. Die Wischblattvorrichtung 10 ist mit dem Wischarm 20 verbunden (vgl. Fig. 1). Der Wischarm 20 ist mit einer Antriebswelle 64 eines Wischerantriebs des Scheibenwischers 44 verbunden. Die Antriebswelle 64 treibt den Wischarm 20 in einer Bewegung relativ zu der Fahrzeugscheibe 46 an. Die Antriebswelle 64 treibt den Wischarm 20 in eine Wischrichtung 66 relativ zu der Fahrzeugscheibe 46 an. Die Antriebswelle 64 treibt das Wischblatt 74 mittels des Wischarms 20 in einer Wischbewegung relativ zu der Fahrzeugscheibe 46 an.

In einem Betriebszustand bewegt der Wischarm 20 während der Wischbewegung das mit dem Wischarm 20 verbundene Wischblatt 74 auf einer kreisbogenförmigen Bahn über die Fahrzeugscheibe 46 In einem Betriebszustand überstreicht das Wischblatt 74 einen Wischbereich 68 der Fahrzeugscheibe 46 (vgl. Fig. 1).

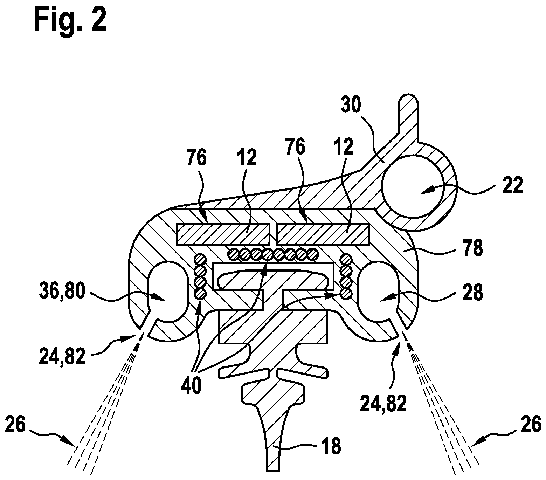

Die Wischblattvorrichtung 10 weist zwei Federschienen 12 auf (vgl. Figur 2). Die Federschienen 12 sind aus Federstahl ausgebildet. Die Federschienen 12 sind identisch zueinander ausgebildet. Die Wischleisteneinheit 16 weist zwei Federschienenkanäle 76 auf. Die Federschienenkanäle 76 sind dazu vorgesehen, die Federschienen 12 aufzunehmen.

Die Wischblattvorrichtung 10 weist eine Wischleisteneinheit 16 auf. Die Wischleisteneinheit 16 weist einen Wischgrundkörper 78 auf. Die Wischleisteneinheit 16 weist eine Wischlippe 18 auf. Die Wischleisteneinheit 16 ist aus einem Kunststoff hergestellt. Die Wischlippe 18 ist aus einem elastischen Material hergestellt. Die Wischlippe 18 ist aus Gummi hergestellt. Die Wischlippe 18 ist an dem Wischgrundkörper 78 angeordnet.

Die Wischlippe 18 ist dazu vorgesehen, zu einer Reinigung der Fahrzeugscheibe 46 über die Fahrzeugscheibe 46 zu wischen. Die Wischlippe 18 kontaktiert bei der Wischbewegung unmittelbar die Fahrzeugscheibe 46.

Die Wischleisteneinheit 16 weist einen Wischflüssigkeitsausgabekanal 28 auf. Die Wischleisteneinheit 16 umfasst einen weiteren Wischflüssigkeitskanal 36. Der weitere Wischflüssigkeitskanal 36 ist getrennt von dem Wischflüssigkeitsausgabekanal 28 ausgebildet. Der weitere Wischflüssigkeitskanal 36 ist getrennt von dem Wischflüssigkeitszuleitungskanal 22 ausgebildet. Der weitere Wischflüssigkeitskanal 36 ist als ein weiterer Wischflüssigkeitsausgabekanal 80 ausgebildet. In einem montierten Zustand ist der Wischflüssigkeitsausgabekanal 28 zumindest abschnittsweise über dem weiteren Wischflüssigkeitsausgabekanal 80 angeordnet.

Der Wischflüssigkeitsausgabekanal 28 umfasst mehrere Ausgabeelemente 24 zu einer Ausgabe von Wischflüssigkeit 26 auf (vgl. Fig. 2). Der weitere Wischflüssigkeitsausgabekanal 80 umfasst mehrere Ausgabeelemente 24. Die Ausgabeelemente 24 sind zu einer Ausgabe von Wischflüssigkeit 26 vorgesehen. Der Wischflüssigkeitsausgabekanal 28 und der weitere Wischflüssigkeitsausgabekanal 80 sind spiegelbildlich zueinander ausgebildet. Die Ausgabeelemente 24 sind als Öffnungen 82 in dem Wischgrundkörper 78 der Wischleisteneinheit 16 ausgebildet.

Die Wischflüssigkeit 26 kann beispielsweise als Wasser, Alkohole oder Gemische, die einen Wasseranteil, Frostschutzanteil und/oder Alkoholanteil aufweisen, ausgebildet sein.

Das Wischblatt 74 ist dazu vorgesehen, zu einer Reinigung der Fahrzeugscheibe 46 über die Fahrzeugscheibe 46 zu wischen. Das Wischblatt 74 ist dazu vorgesehen, auf der Fahrzeugscheibe 46 befindlichen Schmutz und/oder die durch die Öffnungen 82 auf die Fahrzeugscheibe 46 ausgegebene Wischflüssigkeit 26 von der Fahrzeugscheibe 46 wegzuwischen.

Die Wischblattvorrichtung 10 weist einen Heizdraht 40 auf. Die Wischblattvorrichtung 10 weist drei Heizdrähte 40 auf. Die Heizdrähte 40 sind in der Wischleisteneinheit 16 angeordnet. Die Heizdrähte 40 sind um einen Befestigungsbereich der Wischlippe 18 an dem Wischgrundkörper 78 angeordnet. Die Heizdrähte 40 sind unterhalb der Federschienenkanäle 76 in dem Wischgrundkörper 78 der Wischleisteneinheit 16 angeordnet. Die Heizdrähte 40 sind an einer der Wischlippe 18 zugewandten Seite der Wischleisteneinheit 16 angeordnet. Die Heizdrähte 40 erstrecken sich über die gesamte Haupterstreckungslänge der Wischleisteneinheit 16. Die Heizdrähte 40 sind formschlüssig mit der Wischleisteneinheit 16 verbunden. Die Heizdrähte 40 sind co-extrudiert mit der Wischleisteneinheit 16 ausgebildet.

Die Heizdrähte 40 sind als Heizwiderstand ausgebildet. Die Heizdrähte 40 sind dazu vorgesehen, elektrische Energie in Wärmenergie umzuwandeln. Die Heizdrähte 40 sind dazu vorgesehen, die Wischleisteneinheit 16 zu temperieren.

Die Wischleisteneinheit 16 umfasst einen Wischflüssigkeitszuleitungskanal 22 (vgl. Fig. 2 bis 4). Der Wischflüssigkeitszuleitungskanal 22 ist zu einer Zuleitung von Wischflüssigkeit 26 zu dem Wischflüssigkeitsausgabekanal 28 vorgesehen. Der Wischflüssigkeitszuleitungskanal 22 ist zu einer Zuleitung von Wischflüssigkeit 26 zu dem weiteren Wischflüssigkeitsausgabekanal 80 vorgesehen.

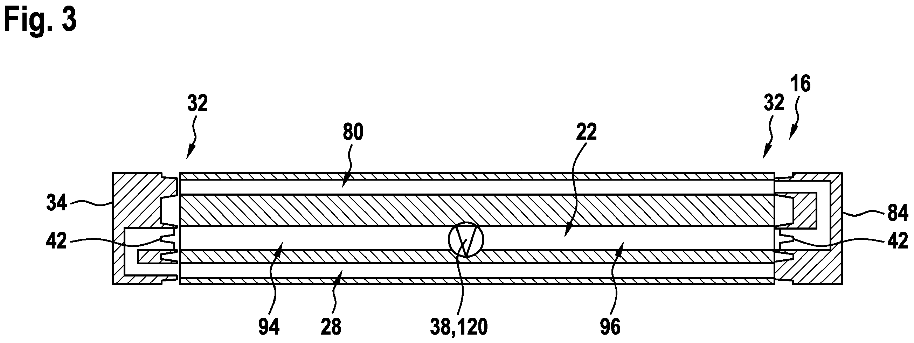

Figur 3 zeigt die Wischleisteneinheit 16 in einer Schnittdarstellung mit dem Wischflüssigkeitsausgabekanal 28 der Wischleisteneinheit 16 und dem weiteren Wischflüssigkeitsausgabekanal 80 der Wischleisteneinheit 16. Der Wischflüssigkeitszuleitungskanal 22 erstreckt sich über einen wesentlichen Abschnitt des Wischflüssigkeitsausgabekanals 28 neben dem Wischflüssigkeitsausgabekanal 28. Der Wischflüssigkeitszuleitungskanal 22 erstreckt sich über die gesamte Haupterstreckungslänge der Wischleisteneinheit 16. Der Wischflüssigkeitszuleitungskanal 22 ist parallel zum Wischflüssigkeitsausgabekanal 28 angeordnet. Der Wischflüssigkeitszuleitungskanal 22 ist parallel zum weiteren Wischflüssigkeitsausgabekanal 80 angeordnet.

Die Wischblattvorrichtung 10 umfasst eine Windabweisereinheit 30 (vgl. Fig. 2). Die Windabweisereinheit 30 ist einstückig mit der Wischleisteneinheit 16 verbunden. Die Windabweisereinheit 30 ist einstückig mit einem Wischgrundkörper 78 der Wischleisteneinheit 16 verbunden. Alternativ können die Windabweisereinheit 30 und die Wischleisteneinheit 16 einteilig miteinander verbunden sein. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Die Windabweisereinheit 30 ist in einer Umgebung des Wischflüssigkeitszuleitungskanals 22 ausgebildet. Der Wischflüssigkeitszuleitungskanal 22 ist innerhalb der Windabweisereinheit 30 angeordnet. Die Windabweisereinheit 30 begrenzt den Wischflüssigkeitszuleitungskanal 22.

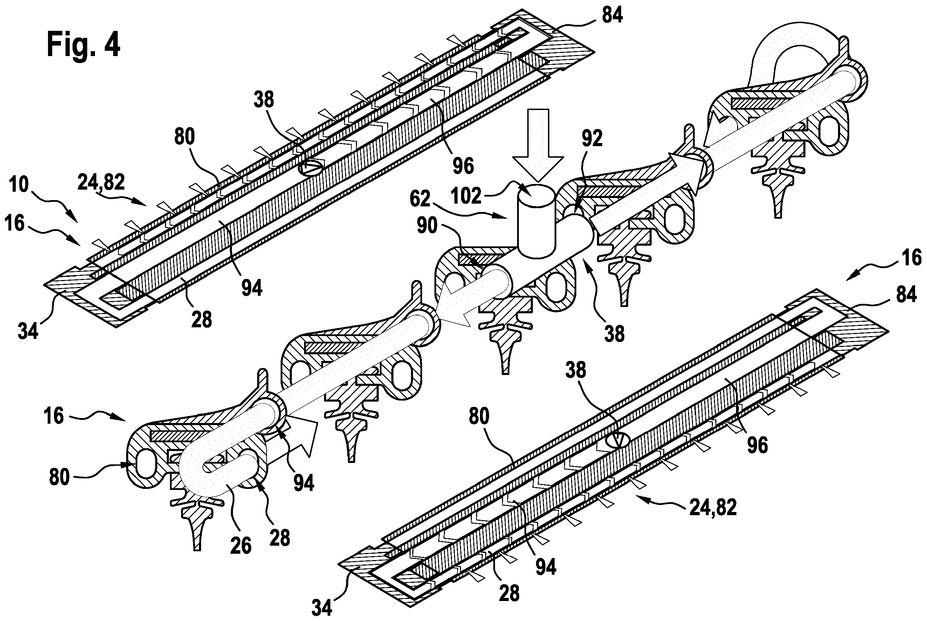

Der Wischflüssigkeitsausgabekanal 28 und der weitere Wischflüssigkeitsausgabekanal 80 weisen jeweils zwei seitliche Endbereiche 32 auf (vgl. Fig. 3 und 4). Der seitliche Endbereich 32 ist zu einer Versorgung mit der Wischflüssigkeit 26 aus dem Wischflüssigkeitszuleitungskanal 22 ausgebildet.

Die Wischblattvorrichtung 10 umfasst eine Endkappe 34. Die Wischblattvorrichtung 10 umfasst eine weitere Endkappe 84. Die Endkappe 34 bildet eine Umleitung für die Wischflüssigkeit 26 aus dem Wischflüssigkeitszuleitungskanal 22 in den Wischflüssigkeitsausgabekanal 28 aus. Die Endkappe 34 bildet eine Umleitung für die Wischflüssigkeit 26 aus dem Wischflüssigkeitszuleitungskanal 22 in den weiteren Wischflüssigkeitsausgabekanal 80 aus.

Die Endkappe 34 und die weitere Endkappe 84 umfassen jeweils ein Rücklaufventil 42. Das Rücklaufventil 42 ist dazu vorgesehen, die Wischflüssigkeit 26 zurückzuhalten. Die Endkappe 34 bildet eine Umleitung für die Wischflüssigkeit 26 aus dem Wischflüssigkeitszuleitungskanal 22 in den Wischflüssigkeitsausgabekanal 28 aus (vgl. Fig. 4). Die weitere Endkappe 84 bildet eine Umleitung für die Wischflüssigkeit 26 aus dem Wischflüssigkeitszuleitungskanal 22 in den weiteren Wischflüssigkeitsausgabekanal 80 aus.

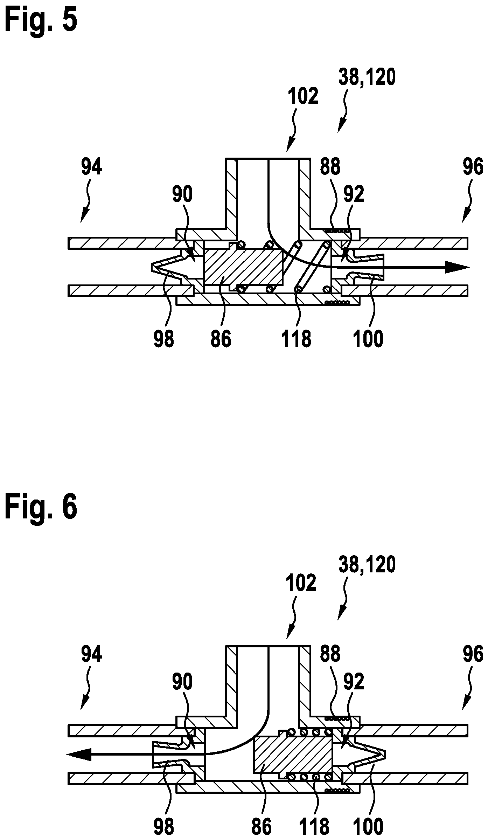

Die Wischblattvorrichtung 10 weist ein Wege-Ventil 38 auf. Figur 5 zeigt einen Teil der Wischblattvorrichtung 10 mit dem Wege-Ventil 38 in einer Schnittdarstellung mit dem geöffneten zweiten Wischflüssigkeitszuleitungsteilkanal 96. Das Wege-Ventil 38 ist in einem Verbindungsbereich zwischen dem Wischarm 20 und der Wischleisteneinheit 16 angeordnet. Das Wege-Ventil 38 ist in dem Wischflüssigkeitszuleitungskanal 22 angeordnet. Das Wege-Ventil 38 teilt den Wischflüssigkeitszuleitungskanal 22 in zwei Wischflüssigkeitszuleitungsteilkanäle 94, 96. Das Wege-Ventil 38 ist als Drei-Wege-Ventil 120 ausgebildet. Das Wege-Ventil 38 weist einen Fluideingang 102 und zwei Fluidausgänge 90, 92 auf. Der Wischflüssigkeitszuleitungskanal 22 ist fluidtechnisch mit einer Wischflüssigkeitsleitung einer Wasserversorgungseinheit eines Fahrzeugs verbunden. Der Wischflüssigkeitszuleitungskanal 22 ist fluidtechnisch durch den Fluideingang 102 mit der Wischflüssigkeitsleitung der Wasserversorgungseinheit verbunden.

Das Wege-Ventil 38 weist ein bewegliches Verschlusselement 86 mit einer Druckfeder 118 auf. Das Wege-Ventil 38 weist eine Spule 88 auf. Das Wege-Ventil 38 ist zumindest teilweise relaisartig ausgebildet. Im Fall, dass die Spule 88 stromlos ist (vgl. Fig. 5), versperrt das bewegliche Verschlusselement 86 einen ersten Fluidausgang 90 der zwei Fluidausgänge und lässt einen zweiten Fluidausgang 92 der Fluidausgänge offen. Im Fall, dass die Spule 88 stromlos ist, drückt die Druckfeder 118 das Verschlusselement 86 gegen den ersten Fluidausgang 90.

Im Fall, dass die Spule 88 bestromt ist (vgl. Fig. 6), versperrt das bewegliche Verschlusselement 86 den zweiten Fluidausgang 92 und lässt den ersten Fluidausgang 90 offen. Im Fall, dass die Spule 88 bestromt ist, ist das Verschlusselement 86 gegen eine Rückstellkraft der Druckfeder 118 gegen den zweiten Fluidausgang 92 gedrückt.

In Figur 5 ist der zweite Wischflüssigkeitszuleitungsteilkanal 96 geöffnet und der erste Wischflüssigkeitszuleitungsteilkanal 94 geschlossen. In Figur 6 ist der erste Wischflüssigkeitszuleitungsteilkanal 94 geöffnet und der zweite Wischflüssigkeitszuleitungsteilkanal 96 geschlossen. Eine Strömungsrichtung der Wischflüssigkeit 26 ist in Figuren 5 und 6 jeweils durch einen Pfeil angedeutet.

Die Wischflüssigkeitszuleitungsteilkanäle 94, 96 weisen jeweils ein Rücklaufventil 98, 100 auf. Die Rücklaufventile 98, 100 sind jeweils an einem Fluidausgang 90, 92 angeordnet. Alternativ können die Wischflüssigkeitszuleitungsteilkanäle 94, 96 rücklaufventillos ausgebildet sein. Das Wege-Ventil 38 ist dazu vorgesehen, eine Wischflüssigkeitsausgabe auszurichten. Das Wege-Ventil 38 steuert die Wischflüssigkeitsausgaberichtung.

Die Wischblattvorrichtung 10 weist einen Wischblattadapter 14 auf. Der Wischblattadapter 14 ist zu einer Verbindung der Wischblattvorrichtung 10 mit einem Wischarm 20 des Scheibenwischers 44 vorgesehen. Der Wischblattadapter 14 ist zu einer Versorgung des Wischflüssigkeitszuleitungskanals 22 mit Wischflüssigkeit 26 ausgebildet.

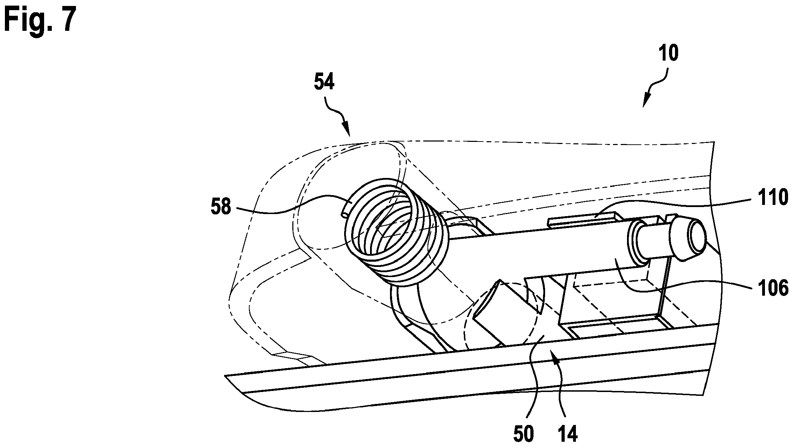

Die Wischblattvorrichtung 10 weist einen Wischarmadapter 54 auf. Der Wischarmadapter 54 ist mit dem Wischblattadapter 14 verbunden (vgl. Fig. 7). Der Wischflüssigkeitszuleitungskanal 22 ist mittels des Wischblattadapters 14 und des Wischarmadapters 54 mit der Wischflüssigkeitsleitung verbunden.

Der Wischflüssigkeitszuleitungskanal 22 weist in einem montierten Zustand einen Versorgungsbereich 62 auf. Der Versorgungsbereich 62 ist in einer Umgebung des Wischblattadapters 14 angeordnet.

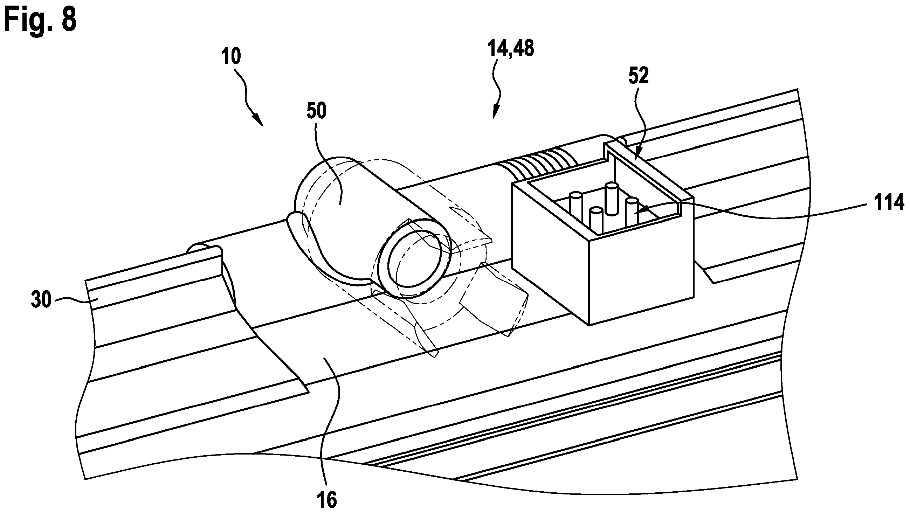

Der Wischblattadapter 14 ist als ein Side-Lock Adapter 48 ausgebildet (vgl. Fig. 7 und 8). Der Side-Lock Adapter 48 ist zu einer Kopplung der Wischblattvorrichtung 10 mit der Wischflüssigkeitsleitung vorgesehen. Der Side-Lock Adapter 48 ist zu einer Kopplung der Wischblattvorrichtung 10 mit einer elektrischen Energieversorgungseinheit vorgesehen.

Die elektrische Energieversorgungseinheit versorgt in zumindest einem Betriebszustand das Wege-Ventil 38 mit elektrischer Energie. Die elektrische Energieversorgungseinheit versorgt in zumindest einem Betriebszustand die Heizdrähte 40 mit elektrischer Energie.

Der Wischblattadapter 14 umfasst ein Stiftaufnahmeelement 50 (vgl. Fig. 8). Das Stiftaufnahmeelement 50 ist als Buchse ausgebildet. Das Stiftaufnahmeelement 50 ist dazu vorgesehen, eine fluidtechnische Verbindung zur Versorgung der Wischblattvorrichtung 10 mit der Wischflüssigkeitsleitung auszubilden. Das Stiftaufnahmeelement 50 ist zur Aufnahme eines Befestigungselements des Wischarmadapters 54 ausgebildet Das Stiftaufnahmeelement 50 ist zu einer fluidtechnischen Verbindung zur Versorgung der Wischblattvorrichtung 10 mit der Wischflüssigkeit 26 vorgesehen.

Der Wischblattadapter 14 weist eine Steckverbindung 52 auf. Die Steckverbindung 52 ist zu einer elektrischen Energieversorgung vorgesehen. Die Steckverbindung 52 ist getrennt von dem Stiftaufnahmeelement 50 ausgebildet. Die Steckverbindung 52 ist senkrecht zu der Verbindung des Stiftaufnahmeelements 50 ausgerichtet. Die Steckverbindung 52 umfasst vier Steckpins 114 (vgl. Fig. 8). Die Steckverbindung 52 ist dazu vorgesehen, elektrische Energie für eine Steuerung und/oder Regelung des Heizdrahtes 40 aufzunehmen und/oder weiterzuleiten. Die Steckverbindung 52 ist dazu vorgesehen, elektrische Energie für eine Steuerung und/oder Regelung des Wege-Ventils 38 aufzunehmen und/oder weiterzuleiten. Die Steckverbindung 52 ist zu einer elektrischen Energieversorgung für das Wege-Ventil 38 vorgesehen.

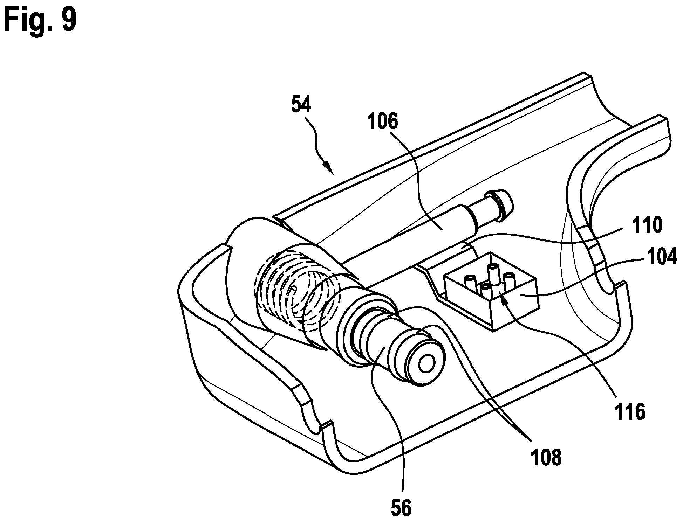

Der Wischarmadapter 54 weist eine zur Steckverbindung 52 korrespondierende Steckverbindung 104 auf. Die Steckverbindung 52 und die korrespondierende Steckverbindung 104 sind in einem Betriebszustand miteinander zur Übertragung von elektrischer Energie gekoppelt. Die korrespondierende Steckverbindung 104 umfasst vier korrespondierende Steckpins 116 (vgl. Fig. 9)

Der Wischarmadapter 54 weist einen Verbindungsstift 56 auf (vgl. Fig. 9). Der Verbindungsstift 56 ist zu einer fluidtechnischen Verbindung des Wischarmadapters 54 mit dem Stiftaufnahmeelement 50 des Wischblattadapters 14 ausgebildet. Der Verbindungsstift 56 ist mit einer zylinderförmigen Außenkontur ausgebildet. Das Stiftaufnahmeelement 50 ist an die Form und Größe des Verbindungsstifts 56 angepasst.

Der Verbindungsstift 56 umfasst ein Federelement 58. Der Verbindungsstift 56 ist zu einer Befestigung in einer Befestigungsstellung an dem Stiftaufnahmeelement 50 angeordnet. Der Verbindungsstift 56 ist durch das Federelement 58 aus der Befestigungsstellung in eine Fixstellung bewegbar. Der Verbindungsstift 56 ist in einer Fixstellung mit dem Stiftaufnahmeelement 50 gekoppelt. Der Verbindungsstift 56 ist in einer Fixstellung mit dem Stiftaufnahmeelement 50 zu einer Wischflüssigkeitsleitung gekoppelt.

Der Verbindungsstift 56 weist einen Seitenanschlussstift 106 auf. Der Seitenanschlussstift 106 ist in einem montierten Zustand mit der Wischflüssigkeitsleitung fluidtechnisch verbunden.

Der Verbindungsstift 56 weist zwei Gummiringe 108 auf. Die Gummiringe 108 sind außen am Verbindungsstift 56 angeordnet.

Der Wischarmadapter 54 weist eine gebogene Metallfeder 110 auf. Die Metallfeder 110 ist zu einer Arretierung des Seitenanschlussstifts 106 in einer Arretierstellung vorgesehen.

In einem montierten Zustand führt eine Pumpe der Wasserversorgungseinheit die Wischflüssigkeit 26 aus einem Wischflüssigkeitsreservoir der Wasserversorgungseinheit durch die Wischflüssigkeitsleitung zu dem Wischarmadapter 54. Die Wischflüssigkeitsleitung ist zumindest teilweise in und/oder an dem Wischarm 20 angeordnet. Die Wischflüssigkeitsleitung ist zumindest teilweise als flexible Leitung ausgebildet.

In dem montierten Zustand gelangt die Wischflüssigkeit 26 aus der Wischflüssigkeitsleitung durch den Seitenanschlussstift 106 in den Verbindungsstift 56. In dem montierten Zustand ist der Verbindungsstift 56 mit dem Stiftaufnahmeelement 50 fluidtechnisch verbunden.

In dem montierten Zustand ist der Verbindungsstift 56 in dem Stiftaufnahmeelement 50 kraftschlüssig durch die Gummiringe 108 verbunden. In dem montierten Zustand ist der Verbindungsstift 56 durch das Federelement 58 in der Fixstellung in dem Stiftaufnahmeelement 50 fixiert.

In dem montierten Zustand ist der Seitenanschlussstift 106 durch die gebogene Metallfeder 110 in der Arretierstellung gehalten. In der Arretierstellung ist der Seitenanschlussstift 106 in einer Vertiefung der gebogenen Metallfeder 110 arretiert.

In dem montierten Zustand sind die Steckverbindung 52 und die korrespondierende Steckverbindung 104 miteinander gekoppelt. Durch eine Kopplung der Steckverbindung 52 mit der korrespondierenden Steckverbindung 104 ist das Wege-Ventil 38 ansteuerbar.

In dem montierten Zustand ist das Stiftaufnahmeelement 50 mit dem Fluideingang 102 des Wege-Ventils 38 fluidtechnisch verbunden. Je nach Zustand der Spule 88 ist der erste Wischflüssigkeitszuleitungsteilkanal 94 oder der zweite Wischflüssigkeitszuleitungsteilkanal 96 zu einer Durchführung der Wischflüssigkeit 26 geöffnet.

In Abhängigkeit davon, ob Wischrichtung 66 nach oben/nach unten orientiert ist, ist die Spule 88 des Wege-Ventils 38 bestromt/stromlos oder umgekehrt.

Bei einer Wischrichtung 66 nach oben ist die Spule 88 bestromt. Im Fall, dass die Spule 88 bestromt ist, öffnet das Verschlusselement 86 des Wege-Ventils 38 den ersten Fluidausgang 90 und sperrt den zweiten Fluidausgang 92. Alternativ kann im Fall, dass die Spule 88 bestromt ist, das Verschlusselement 86 des Wege-Ventils 38 den zweiten Fluidausgang 92 öffnen und den ersten Fluidausgang 90 sperren.

Durch den ersten Fluidausgang 90 gelangt die Wischflüssigkeit 26 in den ersten Wischflüssigkeitszuleitungsteilkanal 94. Die Wischflüssigkeit 26 breitet sich in dem gesamten ersten Wischflüssigkeitszuleitungsteilkanal 94 aus. Die Wischflüssigkeit 26 breitet sich in einer Hälfte der Windabweisereinheit 30 aus (vgl. Fig. 2 bis 4).

Die Endkappe 34 leitet die Wischflüssigkeit 26 aus dem Wischflüssigkeitszuleitungskanal 22 in den Wischflüssigkeitsausgabekanal 28 um. Die Endkappe 34 leitet die Wischflüssigkeit 26 aus dem ersten Wischflüssigkeitszuleitungsteilkanal 94 in den Wischflüssigkeitsausgabekanal 28 um. Die Endkappe 34 leitet die Wischflüssigkeit 26 aus dem Wischflüssigkeitszuleitungskanal 22 in den Wischflüssigkeitsausgabekanal 28 durch das Rücklaufventil 42 um. Ein der Endkappe 34 abgewandtes Ende des Wischflüssigkeitsausgabekanals 28 ist fluiddicht verschlossen. Die Wischflüssigkeit 26 breitet sich in dem gesamten Wischflüssigkeitsausgabekanal 28 aus. Die Wischflüssigkeit 26 strömt aus der Wischleisteneinheit 16 durch die Ausgabeelemente 24 in Richtung der Fahrzeugscheibe 46.

Bei einer Wischrichtung 66 nach unten ist die Spule 88 stromlos. Im Fall, dass die Spule 88 stromlos ist, öffnet das Verschlusselement 86 des Wege-Ventils 38 den zweiten Fluidausgang 92 und sperrt den ersten Fluidausgang 90. Alternativ kann im Fall, dass die Spule 88 stromlos ist, das Verschlusselement 86 des Wege-Ventils 38 den zweiten Fluidausgang 92 sperren und den ersten Fluidausgang 90 öffnen. Durch den zweiten Fluidausgang 92 gelangt die Wischflüssigkeit 26 in den zweiten Wischflüssigkeitszuleitungsteilkanal 96. Die Wischflüssigkeit 26 breitet sich in dem gesamten zweiten Wischflüssigkeitszuleitungsteilkanal 96 aus. Die Wischflüssigkeit 26 breitet sich in einer Hälfte der Windabweisereinheit 30 aus (vgl. Fig. 3). Die weitere Endkappe 84 leitet die Wischflüssigkeit 26 aus dem Wischflüssigkeitszuleitungskanal 22 in den weiteren Wischflüssigkeitsausgabekanal 80 um. Die weitere Endkappe 84 leitet die Wischflüssigkeit 26 aus dem zweiten Wischflüssigkeitszuleitungsteilkanal 96 in den weiteren Wischflüssigkeitsausgabekanal 80 um. Die weitere Endkappe 84 leitet die Wischflüssigkeit 26 aus dem Wischflüssigkeitszuleitungskanal 22 in den weiteren Wischflüssigkeitsausgabekanal 80 durch das Rücklaufventil 42 um. Ein der weiteren Endkappe 84 abgewandtes Ende des weiteren Wischflüssigkeitsausgabekanals 80 ist fluiddicht verschlossen. Die Wischflüssigkeit 26 breitet sich in dem gesamten weiteren Wischflüssigkeitsausgabekanal 80 aus. Die Wischflüssigkeit 26 strömt aus der Wischleisteneinheit 16 durch die Ausgabeelemente 24 in Richtung der Fahrzeugscheibe 46 (vgl. Fig. 2 bis 4).

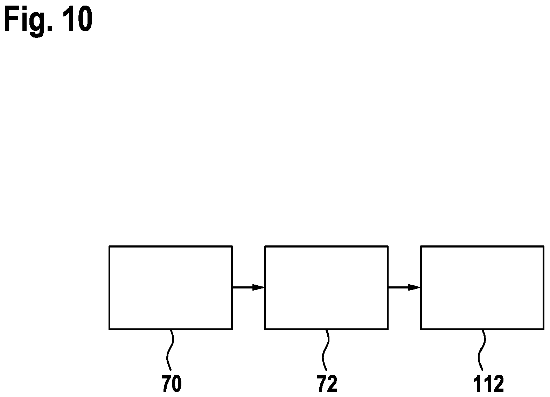

Figur 10 zeigt eine schematische Darstellung eines erfindungsgemäßen Verfahrens. Das Verfahren ist zu einer Montage des Wischblattsystems 60 vorgesehen.

Das Verfahren weist einen Vororientierungsschritt 70 auf. In dem Vororientierungsschritt 70 werden die Wischblattvorrichtung 10 mit dem Wischblatt 74 und der Wischarm 20 zueinander vororientiert. In dem Vororientierungsschritt 70 wird der Wischblattadapter 14 und der Wischarmadapter 54 zueinander vororientiert. In dem Vororientierungsschritt 70 wird der Verbindungsstift 56 und das Stiftaufnahmeelement 50 zueinander vororientiert.

Das Verfahren weist einen Verbindungsschritt 72 auf. In dem Verbindungsschritt 72 wird der Verbindungsstift 56 in das Stiftaufnahmeelement 50 geschoben. In dem Verbindungsschritt 72 wird der Verbindungsstift 56 mit dem Stiftaufnahmeelement 50 fluidtechnisch verbunden. In dem Verbindungsschritt 72 wird der Verbindungsstift 56 mit dem Stiftaufnahmeelement 50 fluiddicht verbunden. In dem Verbindungsschritt 72 wird der Verbindungsstift 56 mit dem Stiftaufnahmeelement 50 mittels der Gummiringe 108 kraftschlüssig verbunden. In dem Verbindungsschritt 72 wird der Seitenanschlussstift 106 mittels der Metallfeder 110 in die Arretierstellung gebracht. In dem Verbindungsschritt 72 wird der Seitenanschlussstift 106 mittels der Metallfeder 110 arretiert. In dem Verbindungsschritt 72 werden der Wischarmadapter 54 und der Wischblattadapter 14 miteinander teilweise gekoppelt.

Das Verfahren weist einen weiteren Verbindungsschritt 112 auf. In dem weiteren Verbindungsschritt 112 werden die Steckverbindung 52 und die korrespondierende Steckverbindung 104 miteinander gekoppelt. In dem weiteren Verbindungsschritt 112 werden die Steckverbindung 52 und die korrespondierende Steckverbindung 104 miteinander elektrisch gekoppelt. In dem weiteren Verbindungsschritt 112 werden die Steckverbindung 52 und die korrespondierende Steckverbindung 104 formschlüssig gekoppelt. In dem weiteren Verbindungsschritt 112 werden die Steckverbindung 52 und die korrespondierende Steckverbindung 104 durch eine Rotationsbewegung des Wischarmadapters 54 bezüglich des Wischblatts 74 und/oder durch eine Rotationsbewegung des Wischblatts 74 bezüglich des Wischarmadapters 54 miteinander gekoppelt. In dem Verbindungsschritt 72 werden der Wischarmadapter 54 und der Wischblattadapter 14 miteinander teilweise gekoppelt.

In dem Verbindungsschritt 72 und dem weiteren Verbindungsschritt 112 wird der Wischarmadapter 54 und der Wischblattadapter 14 miteinander gekoppelt. In dem Verbindungsschritt 72 und dem weiteren Verbindungsschritt 112 wird die Wischblattvorrichtung 10 und/oder das Wischblatt 74 und der Wischarm 20 fluidtechnisch miteinander gekoppelt. In dem Verbindungsschritt 72 und dem weiteren Verbindungsschritt 112 wird die Wischblattvorrichtung 10 und/oder das Wischblatt 74 und der Wischarm 20 mechanisch miteinander gekoppelt.

## Patentansprüche

1. Wischblattvorrichtung (10) mit zumindest einem Wischblattadapter (14) zu einer Verbindung mit zumindest einem Wischarm (20), mit zumindest einer Federschiene (12) und mit zumindest einer Wischleisteneinheit (16), welche zumindest eine Wischlippe (18) und zumindest einen Wischflüssigkeitsausgabekanal (28) aufweist, welcher zumindest ein Ausgabeelement (24) zu einer Ausgabe von Wischflüssigkeit (26) umfasst, wobei die zumindest eine Wischleisteneinheit (16) zumindest einen Wischflüssigkeitszuleitungskanal (22) zu einer Zuleitung von Wischflüssigkeit (26) zu dem Wischflüssigkeitsausgabekanal (28) umfasst, wobei sich der Wischflüssigkeitszuleitungskanal (22) über zumindest einen wesentlichen Abschnitt des Wischflüssigkeitsausgabekanals (28) neben dem Wischflüssigkeitsausgabekanal (28) erstreckt, wobei die zumindest eine Wischleisteneinheit (16) zumindest einen weiteren Wischflüssigkeitskanal (36), welcher getrennt von dem einen Wischflüssigkeitsausgabekanal (28) und getrennt von dem einen Wischflüssigkeitszuleitungskanal (22) ausgebildet ist, umfasst, **dadurch gekennzeichnet, dass** die Wischleinsteneinheit (16) zumindest ein Wegeventil (38) umfasst, welches dazu vorgesehen ist, eine Wischflüssigkeitsausgabe auszurichten, und welches in einem Verbindungsbereich zwischen dem zumindest einen Wischarm (20) und der zumindest einen Wischleisteneinheit (16) angeordnet ist.

2. Wischblattvorrichtung (10) nach Anspruch 1, **gekennzeichnet durch** eine Windabweisereinheit (30), welche zumindest im Wesentlichen in einer Umgebung des zumindest einen Wischflüssigkeitszuleitungskanals (22) ausgebildet ist.

3. Wischblattvorrichtung (10) nach Anspruch 1 oder 2, **dadurch gekennzeichnet, dass** der zumindest eine Wischflüssigkeitsausgabekanal (28) einen seitlichen Endbereich (32) aufweist, welcher zu einer Versorgung mit zumindest einer Wischflüssigkeit (26) aus dem zumindest einen Wischflüssigkeitszuleitungskanal (22) ausgebildet ist.

4. Wischblattvorrichtung (10) nach einem der vorhergehenden Ansprüche, **gekennzeichnet durch** zumindest eine Endkappe (34, 84), welche eine Umleitung für eine Wischflüssigkeit (26) aus dem zumindest einen Wischflüssigkeitszuleitungskanal (22) in den zumindest einen Wischflüssigkeitsausgabekanal (28) ausbildet.

5. Wischblattvorrichtung (10) nach einem der vorhergehenden Ansprüche, **gekennzeichnet durch** zumindest einen Heizdraht (40), welcher in der zumindest einen Wischleisteneinheit (16) angeordnet ist.

6. Wischblattvorrichtung (10) nach einem der vorhergehenden Ansprüche, **dadurch gekennzeichnet, dass** die zumindest eine Endkappe (34, 84) zumindest ein Rücklaufventil (42) umfasst, welches dazu vorgesehen ist, die zumindest eine Wischflüssigkeit (26) zumindest teilweise zurückzuhalten.

7. Wischblattvorrichtung (10) nach einem der vorhergehenden Ansprüche, **dadurch gekennzeichnet, dass** der zumindest eine Wischflüssigkeitszuleitungskanal (22) in einem montierten Zustand einen Versorgungsbereich (62) in einer Umgebung des Wischblattadapters (14) aufweist, welcher zu einer Versorgung des Wischflüssigkeitszuleitungskanals (22) mit Wischflüssigkeit (26) ausgebildet ist.

8. Wischblattvorrichtung (10) nach einem der vorhergehenden Ansprüche, **dadurch gekennzeichnet, dass** der zumindest eine Wischblattadapter (14) als ein Side-Lock Adapter (48) ausgebildet ist, welcher zu einer Kopplung der Wischblattvorrichtung (10) mit zumindest einer Wischflüssigkeitsleitung und mit einer elektrischen Energieversorgungseinheit vorgesehen ist.

9. Wischblattvorrichtung (10) zumindest nach Anspruch 8, **dadurch gekennzeichnet, dass** der zumindest eine Wischblattadapter (14) ein Stiftaufnahmeelement (50) umfasst, welches dazu vorgesehen ist, eine fluidtechnische Verbindung zur Versorgung der Wischblattvorrichtung (10) mit zumindest einer Wischflüssigkeit (26), auszubilden.

10. Wischblattvorrichtung (10) zumindest nach Anspruch 9, **dadurch gekennzeichnet, dass** der Wischblattadapter (14) zumindest eine Steckverbindung (52) zu einer elektrischen Energieversorgung aufweist, welche getrennt von dem zumindest einen Stiftaufnahmeelement (50) ausgebildet ist.

11. Wischblattsystem (60) mit zumindest einer Wischblattvorrichtung (10) nach einem der Ansprüche 8 bis 10 mit zumindest einem Wischarmadapter (54), welcher zumindest einen Verbindungsstift (56) aufweist, der zu einer fluidtechnischen Verbindung des Wischarmadapters (54) mit dem Stiftaufnahmeelement (50) des Wischblattadapters (14) ausgebildet ist.

12. Wischblattsystem (60) nach Anspruch 11, **dadurch gekennzeichnet, dass** der Verbindungsstift (56) zumindest ein Federelement (58) umfasst.

## Claims

1. Wiper blade device (10) with at least one wiper blade adapter (14) for connecting to at least one wiper arm (20), with at least one spring rail (12) and with at least one wiper strip unit (16) which has at least one wiper lip (18) and at least one wiper fluid output channel (28) which comprises at least one output element (24) for outputting wiper fluid (26), wherein the at least one wiper strip unit (16) comprises at least one wiper fluid feed channel (22) for feeding wiper fluid (26) to the wiper fluid output channel (28), wherein the wiper fluid feed channel (22) extends next to the wiper fluid output channel (28) over at least a substantial portion of the wiper fluid output channel (28), wherein the at least one wiper strip unit (16) comprises at least one further wiper fluid channel (36) which is formed separately from the one wiper fluid output channel (28) and separately from the one wiper fluid feed channel (22), **characterized in that** the wiper strip unit (16) comprises at least one directional control valve (38) which is provided to orient a wiper fluid output and which is arranged in a connecting region between the at least one wiper arm (20) and the at least one wiper strip unit (16) .

2. Wiper blade device (10) according to Claim 1, **characterized by** a wind deflector unit (30) which is formed at least substantially in the vicinity of the at least one wiper fluid feed channel (22).

3. Wiper blade device (10) according to Claim 1 or 2, **characterized in that** the at least one wiper fluid output channel (28) has a lateral end region (32) which is designed for supplying at least one wiper fluid (26) from the at least one wiper fluid feed channel (22).

4. Wiper blade device (10) according to one of the preceding claims, **characterized by** at least one end cap (34, 84) which forms a bypass for a wiper fluid (26) from the at least one wiper fluid feed channel (22) into the at least one wiper fluid output channel (28).

5. Wiper blade device (10) according to one of the preceding claims, **characterized by** at least one heating wire (40) which is arranged in the at least one wiper strip unit (16).

6. Wiper blade device (10) according to one of the preceding claims, **characterized in that** the at least one end cap (34, 84) comprises at least one return valve (42) which is provided for at least partially holding back the at least one wiper fluid (26).

7. Wiper blade device (10) according to one of the preceding claims, **characterized in that,** in a mounted state, the at least one wiper fluid feed channel (22) has a supply region (62) in the vicinity of the wiper blade adapter (14), which supply region is designed for supplying the wiper fluid feed channel (22) with wiper fluid (26).

8. Wiper blade device (10) according to one of the preceding claims, **characterized in that** the at least one wiper blade adapter (14) is in the form of a side-lock adapter (48) which is provided for coupling the wiper blade device (10) to at least one wiper fluid line and to an electrical energy supply unit.

9. Wiper blade device (10) at least according to Claim 8, **characterized in that** the at least one wiper blade adapter (14) comprises a pin-receiving element (50) which is provided to form a fluidic connection for supplying the wiper blade device (10) with at least one wiper fluid (26).

10. Wiper blade device (10) at least according to Claim 9, **characterized in that** the wiper blade adapter (14) has at least one plug-in connection (52) to an electrical energy supply, which plug-in connection is formed separately from the at least one pin-receiving element (50).

11. Wiper blade system (60) with at least one wiper blade device (10) according to one of Claims 8 to 10 with at least one wiper arm adapter (54) which has at least one connecting pin (56) which is designed for fluidically connecting the wiper arm adapter (54) to the pin-receiving element (50) of the wiper blade adapter (14).

12. Wiper blade system (60) according to Claim 11, **characterized in that** the connecting pin (56) comprises at least one spring element (58).

## Revendications

1. Dispositif de lame d'essuie-glace (10) muni d'au moins un adaptateur de lame d'essuie-glace (14) pour une connexion à au moins un bras d'essuie-glace (20), muni d'au moins un rail élastique (12) et muni d'au moins une unité de raclette d'essuie-glace (16), qui comprend au moins une lèvre d'essuie-glace (18) et au moins un canal de déchargement de liquide d'essuie-glace (28), qui comporte au moins un élément de déchargement (24) pour un déchargement de liquide d'essuie-glace (26), l'au moins une unité de raclette d'essuie-glace (16) comportant au moins un canal d'apport de liquide d'essuie-glace (22) pour un apport de liquide d'essuie-glace (26) au canal de déchargement de liquide d'essuie-glace (28), le canal d'apport de liquide d'essuie-glace (22) s'étendant sur au moins une section principale du canal de déchargement de liquide d'essuie-glace (28) à côté du canal de déchargement de liquide d'essuie-glace (28), l'au moins une unité de raclette d'essuie-glace (16) comportant au moins un canal de liquide d'essuie-glace supplémentaire (36), qui est configuré séparément du canal de déchargement de liquide d'essuie-glace (28) et séparément du canal d'apport de liquide d'essuie-glace (22), **caractérisé en ce que** l'unité de raclette d'essuie-glace (16) comporte au moins une soupape à voies (38), qui est prévue pour diriger un déchargement de liquide d'essuie-glace, et qui est agencée dans une zone de connexion entre l'au moins un bras d'essuie-glace (20) et l'au moins une unité de raclette d'essuie-glace (16).

2. Dispositif de lame d'essuie-glace (10) selon la revendication 1, **caractérisé par** une unité de déflecteur de vent (30), qui est formée au moins essentiellement dans un environnement de l'au moins un canal d'apport de liquide d'essuie-glace (22).

3. Dispositif de lame d'essuie-glace (10) selon la revendication 1 ou 2, **caractérisé en ce que** l'au moins un canal de déchargement de liquide d'essuie-glace (28) comprend une zone d'extrémité latérale (32), qui est configurée pour une alimentation avec au moins un liquide d'essuie-glace (26) à partir de l'au moins un canal d'apport de liquide d'essuie-glace (22).

4. Dispositif de lame d'essuie-glace (10) selon l'une quelconque des revendications précédentes, **caractérisé par** au moins une coiffe terminale (34, 84), qui forme une redirection pour un liquide d'essuie-glace (26) provenant de l'au moins un canal d'apport de liquide d'essuie-glace (22) dans l'au moins un canal de déchargement de liquide d'essuie-glace (28).

5. Dispositif de lame d'essuie-glace (10) selon l'une quelconque des revendications précédentes, **caractérisé par** au moins un fil chauffant (40), qui est agencé dans l'au moins une unité de raclette d'essuie-glace (16).

6. Dispositif de lame d'essuie-glace (10) selon l'une quelconque des revendications précédentes, **caractérisé en ce que** l'au moins une coiffe d'extrémité (34, 84) comporte au moins une soupape de retour (42), qui est prévue pour retenir au moins partiellement l'au moins un liquide d'essuie-glace (26).

7. Dispositif de lame d'essuie-glace (10) selon l'une quelconque des revendications précédentes, **caractérisé en ce que** l'au moins un canal d'apport de liquide d'essuie-glace (22) comprend dans un état monté une zone d'alimentation (62) dans un environnement de l'adaptateur de lame d'essuie-glace (14), qui est configurée pour une alimentation du canal d'apport de liquide d'essuie-glace (22) en liquide d'essuie-glace (26) .

8. Dispositif de lame d'essuie-glace (10) selon l'une quelconque des revendications précédentes, **caractérisé en ce que** l'au moins un adaptateur de lame d'essuie-glace (14) est configuré sous la forme d'un adaptateur à verrouillage latéral (48), qui est prévu pour un couplage du dispositif de lame d'essuie-glace (10) avec au moins une conduite de liquide d'essuie-glace et avec une unité d'alimentation en énergie électrique.

9. Dispositif de lame d'essuie-glace (10) au moins selon la revendication 8, **caractérisé en ce que** l'au moins un adaptateur de lame d'essuie-glace (14) comporte un élément de réception de tige (50), qui est prévu pour former une connexion fluidique pour l'alimentation du dispositif de lame d'essuie-glace (10) en au moins un liquide d'essuie-glace (26).

10. Dispositif de lame d'essuie-glace (10) au moins selon la revendication 9, **caractérisé en ce que** l'adaptateur de lame d'essuie-glace (14) comprend au moins une connexion enfichable (52) à une alimentation en énergie électrique, qui est configurée séparément de l'au moins un élément de réception de tige (50).

11. Système de lame d'essuie-glace (60) muni d'au moins un dispositif de lame d'essuie-glace (10) selon l'une quelconque des revendications 8 à 10 muni d'au moins un adaptateur de bras d'essuie-glace (54), qui comprend au moins une tige de connexion (56), qui est configurée pour une connexion fluidique de l'adaptateur de bras d'essuie-glace (54) à l'élément de réception de tige (50) de l'adaptateur de lame d'essuie-glace (14).

12. Système de lame d'essuie-glace (60) selon la revendication 11, **caractérisé en ce que** la tige de connexion (56) comporte au moins un élément élastique (58) .
